# EUROPEAN PATENT SPECIFICATION

(11) **EP 0 532 685 B1**
(45) Date of publication and mention of the grant of the patent: **03.12.1997**
(21) Application number: 91912662.3
(22) Date of filing: 05.06.1991
(51) Int. Cl.: H04L 27/34

(54) **METHOD AND APPARATUS FOR MAPPING AN EIGHT DIMENSIONAL CONSTELLATION OF A CONVOLUTIONALLY CODED COMMUNICATION SYSTEM**
VERFAHREN UND EINRICHTUNG ZUR ABBILDUNG EINER ACHTDIMENSIONALEN KONSTELLATION EINES FALTUNGSKODIERTEN NACHRICHTENSYSTEMS
PROCEDE ET APPAREIL DE TOPOGRAPHIE D'UNE CONSTELLATION EN HUIT DIMENSIONS D'UN SYSTEME DE COMMUNICATION CODE EN CIRCONVOLUTION

(30) Priority: 08.06.1990 US 535329; 11.01.1991 US 640260
(43) Date of publication of application: 24.03.1993
(73) Proprietor: GENERAL DATACOMM, INC., Middlebury, CT 06287-1299 (US)
(72) Inventor: GOLDSTEIN, Yuri, Southbury, CT 06488 (US)
(74) Representative: Gibson, Stewart Harry
(86) International application number: PCT/US91/03964
(87) International publication number: WO 91/19362

(56) References cited:
- US-A- 4 713 817
- US-A- 4 748 626
- US-A- 4 807 230

## Description

### BACKGROUND OF THE INVENTION

This invention relates to methods for mapping a stream of information bits sent over a channel in a plurality of signaling slots to the points of an eight dimensional (8D) signal constellation. This invention more particularly relates to mapping techniques for defining the points of an 8D constellation through the use of twenty-nine bits.

An eight-dimensional, sixty-four state convolutionally coded communication system for transmitting information is disclosed in U.S. Patent #4,713,817 to Wei which is hereby incorporated by reference herein. With such a system, Wei teaches how to construct a 19.2 Kbit/second modem which utilizes four 2D constellations, each having one hundred sixty points. Although Wei claims an eight dimensional constellation which is comprised of a concatenation of the four 160 points 2D constellations (e.g. a constellation having 160⁴ points), Wei teaches (at Col. 17, lines 57-65) that 536,870,912 points of the 655,360,000 8D points are chosen, and that twenty-nine bits are used to represent those 536,870,912 points. In particular, in accord with the teachings of U.S. Patent #4,597,090 to Forney, Jr., Wei teaches that each of the four 2D constellations should be divided into a group of inner points, and a group of outer points, each outer point being further from the origin than each of the inner points. In the one hundred sixty point 2D constellation, Wei provides one hundred twenty-eight inner points, and thirty-two outer points. Wei then teaches that the 536,870,912 8D points chosen should include only those 8D points having four inner points or three inner points and one outer point distributed over the four 2D constellations.

In representing the 536,870,912 8D points with twenty-nine bits, Wei effectively divides each group of one hundred twenty-eight inner 2D points into four rotational subgroups of thirty-two points each, and each group of thirty-two outer 2D points into four rotational subgroups of eight point each. In choosing (mapping) a point, Wei first uses one bit to indicate whether 8D point has all inner points, or three inner points and one outer point. If the 8D point has all inner points, eight additional bits, two for each 2D constellation, are used to indicate in which of the four rotational subgroups the chosen point is located. The remaining twenty bits (five per 2D constellation) are used to identify the particular point out of the thirty-two points of the rotational subgroup for each 2D constellation. Where the 8D point has an outer point as identified by a first bit, eight additional bits are still used to identify the rotational subgroups. For the inner points, five bits per 2D constellation (total of fifteen) are still utilized to identify the points. However, of the remaining five bits, two bits are used to identify from which of the four 2D constellations the outer point is being chosen, and three bits are used to identify which of the eight outer points of an outer rotational subgroup is being sent.

While the Wei patent as disclosed (as opposed to claimed) is effective in providing a 19.2 Kbit/sec modem, the mapping technique utilized is not necessarily optimal or desirable. In particular, the division of each constellation into inner and outer points does not guarantee or approach an optimal signal to noise ratio, as there exist points among those 536,870,912 8D points chosen which have higher energy than some 8D points which would have had two inner and two outer points.

### SUMMARY OF THE INVENTION

In accordance with the present invention, there is provided a mapping method for defining with z bits all p=2^{z} points of a constellation having 4+2y dimensions where y is a non-negative integer, the constellation comprising a desired subset of the concatenation of 2+y 2D constellations, each 2D constellation comprising n(2^{r}) points, where n is an integer greater than two, r is an integer greater than two, and z is an integer, the mapping technique being characterised by:
a) dividing each 2D constellation into n groups of 2^{r} points each, the n groups being chosen such that each is of substantially different average energy relative to the others, the concatenation of one of the n groups from each 2D constellation comprising a (4+2y)D grouping;
b) choosing 2^{z-2r-ry} (4+2y)D groupings of the possible n^{(2+y)} (4+2y)D groupings, the union of said 2^{z-2r-ry} (4+2y)D groupings constituting said constellation;
c) for each 2D constellation, partitioning each group of 2^{r} points into four subgroups of 2^{r-2} points, three of the subgroups representing ninety, one hundred eighty, and two hundred seventy degree rotations of the first subgroup;
d) choosing a (4+2y)D point in said constellation by,
   1) utilizing z-2r-ry bits of said z bits to identify in which of said 2^{z-2r-ry} (4+2y)D groupings said (4+2y)D point lies;
   2) utilizing 2(2+y) additional bits of said z bits, two for each 2D constellation, to identify in which subgroups of the identified (4+2y)D grouping said (4+2y)D point lies;
   3) utilizing (r-2) (2+y) of said z bits, r-2 bits for each 2D constellation, to identify among the points of said identified (4+2y)D subgroups the (4+2y)D point being sent.

Also in accordance with the present invention, there is provided an apparatus for transmitting a stream of s information bits by sending corresponding signals over a channel in 4+2y signalling slots, where y is a non-negative integer and s is a positive integer equal to at least thirteen, said apparatus including encoding means for encoding at least some of the s information bits that appear during a block of said 4+2y signalling slots by adding at least one redundant bit, to form a set of z signal point selection bits for said block, where z is an integer greater than s, selecting means for selecting, for said set of z signal point selection bits, a 4+2y dimensional signal point drawn from a 4+2y dimensional constellation for said block, said 4+2y dimensional signal point selected for a particular said block being dependent on the 4+2y dimensional signal point selected for at least one other said block, said selecting means being connected to be responsive to said encoding means and including a mapping means for establishing a correspondence between each possible combination of said z signal point selection bits and the coordinates of the 4+2y dimensional signal points in said 4+2y dimensional constellation, and modulating means for modulating at least one carrier for transmission over said channel in accordance with the coordinates represented by each selected said 4+2y dimensional signal point, said modulating means being connected to be responsive to said encoding means,
**characterized in that**
said encoding means and said selecting means define a dividing of said 4+2y dimensional constellation into 2^{z-2r-ry} 4+2y dimensional groupings out of a possible n^{2+y} 4+2y dimensional groupings, n being an integer greater than two and r being an integer greater than two, each 4+2y dimensional grouping being a concatenation of 2+y 2D groups, one from each of 2+y 2D constellations, such that said 4+2y dimensional constellation is a subset of a concatenation of said 2+y 2D constellations,
wherein each 2D group comprises 2^{r} 2D points of its respective 2D constellation, and each said 2D constellation is divided into n 2D groups, each 2D group having a substantially different average energy relative to the others, and
wherein said encoding means and said selecting means further define a dividing of each of said 2^{z-2r-ry} 4+2y dimensional groupings into four subgroups, three of the subgroups representing ninety, one hundred eighty, and two hundred seventy degree rotations of the first subgroup.

Further in accordance with the invention, there is provided a mapping method utilizing 29(x) bits, x being an integer greater than one, for defining all points of an 8(x) dimensional constellation, the 8(x) dimensional constellation comprising a desired subset of the concatenation of 4(x) two dimensional constellations, each two dimensional constellation comprising 32(y) points, where y is an integer greater than five, the mapping technique being characterised by:
a) dividing each two dimensional constellation into y groups of thirty-two points each, the y groups being chosen such that each is of substantially different average energy relative to the others, the concatenation of one of the y groups from each two dimensional constellation comprising an 8(x) dimensional grouping;
b) choosing from the possible y^{4(x)} 8(x) dimensional groupings, 512^{(x)} 8(x) dimensional groupings, said y^{4(x)} 8(x) dimensional groupings constituting said 8(x) dimensional constellation;
c) for each two dimensional constellation partitioning each group of thirty-two points into four subgroups of eight points, three of the subgroups representing ninety, one hundred eighty, and two hundred seventy degree rotations of the first subgroup; and
d) choosing an 8(x)-dimensional point in said 8(x) dimensional constellation by,
   1) utilizing 9(x) bits of said 29(x) bits to identify in which of said 512^{(x)} 8(x)-dimensional groupings said 8(x) dimensional point lies;
   2) utilizing 8(x) additional bits of said 29(x) bits, two for each two-dimensional constellation, to identify in which subgroups of the identified 8(x)-dimensional grouping said 8(x)-dimensional point lies; and
   3) utilizing the remaining 12(x) bits of said 29(x) bits, three for each two-dimensional constellation, to identify among the points of said identified sub-groups said 8(x)-dimensional point.

Additional objects and advantages of the invention will become evident to those skilled in the art upon reference to the detailed description taken in conjunction with the provided figures.

### BRIEF DESCRIPTION OF THE DRAWINGS

Figure 1 is a block diagram of transmitter including an encoder, a bit grouping device, and a mapping table.

Figures 2a and 2b are one hundred sixty point 2D constellations divided into five groups according to first and second manners of carrying out the first preferred embodiment of the invention.

Figure 3 is a one hundred ninety-two point 2D constellation divided into six groups according to the second preferred embodiment of the invention.

### DETAILED DESCRIPTION OF THE PREFERRED EMBODIMENT

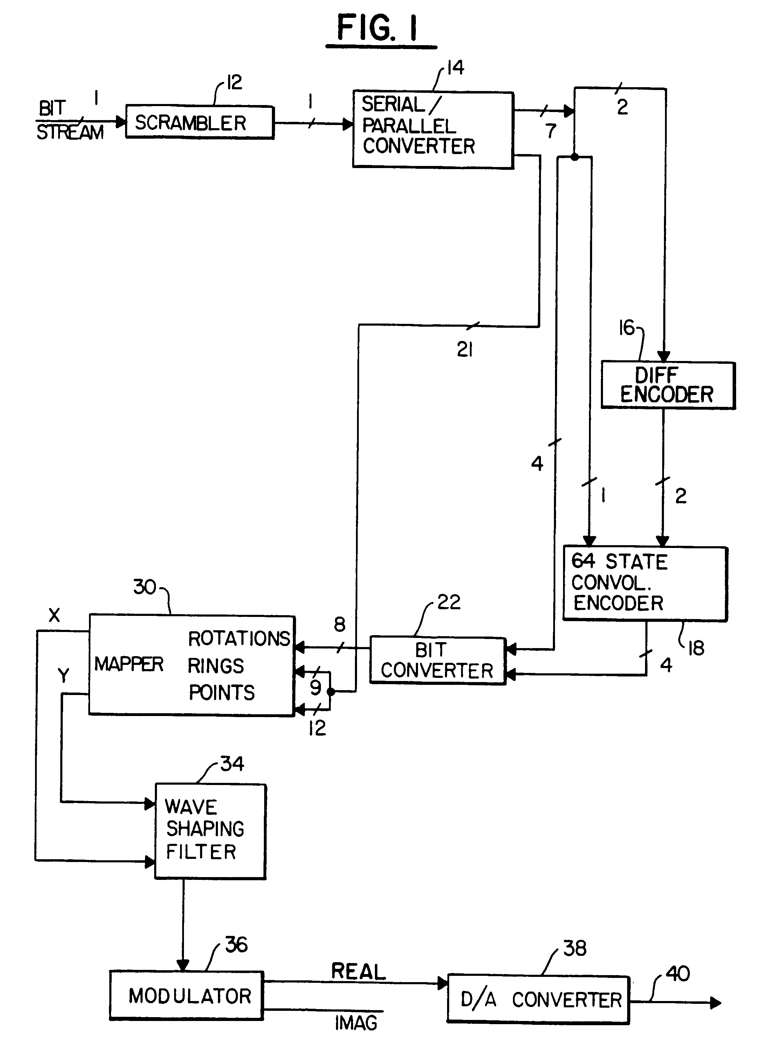

Referring to Figure 1, and in accord with the preferred embodiment, an incoming serial bit stream is scrambled by scrambler 12 and sent to serial-to-parallel converter 14 which generates a twenty-eight bit parallel word. Of the twenty-eight bits, seven of the twenty-eight bits are chosen as described in the aforestated Wei patent. Of the seven bits, two are sent to a differential encoder 16. The two differentially encoded bits along with the third bit of the seven chosen bits are sent to a sixty-four state convolutional encoder 18 which adds one redundant bit indicative of the current state of a finite state device represented by the convolutional encoder. The four convolutionally encoded bits are then sent together with the four remaining chosen bits to a bit converter 22. The bit converter 22 generates eight bits (four sets of two bits) which, as is hereinafter described in more detail, are used to choose in which of four rotational subgroups in each of four 2D constellations a point in the hereinafter described 8D constellation lies. The remaining twenty-one bits which were not chosen for encoding and/or bit converting are used to choose the eight dimensional grouping in which the point in the 8D constellation lies as well as the point itself in the chosen 8D grouping. Thus, all twenty-nine bits are sent to a mapper 30 which takes the twenty-nine bits and generates therefrom four 2D coordinate pairs (four consecutive 2D signal points). The four 2D coordinate pairs are sent serially (one pair per baud) via a shaping filter 34 to a modulator 36 which modulates them onto a carier. The real part of the modulator output is then digital-to-analog converted by D/A converter 38 for transmission over a channel 40.

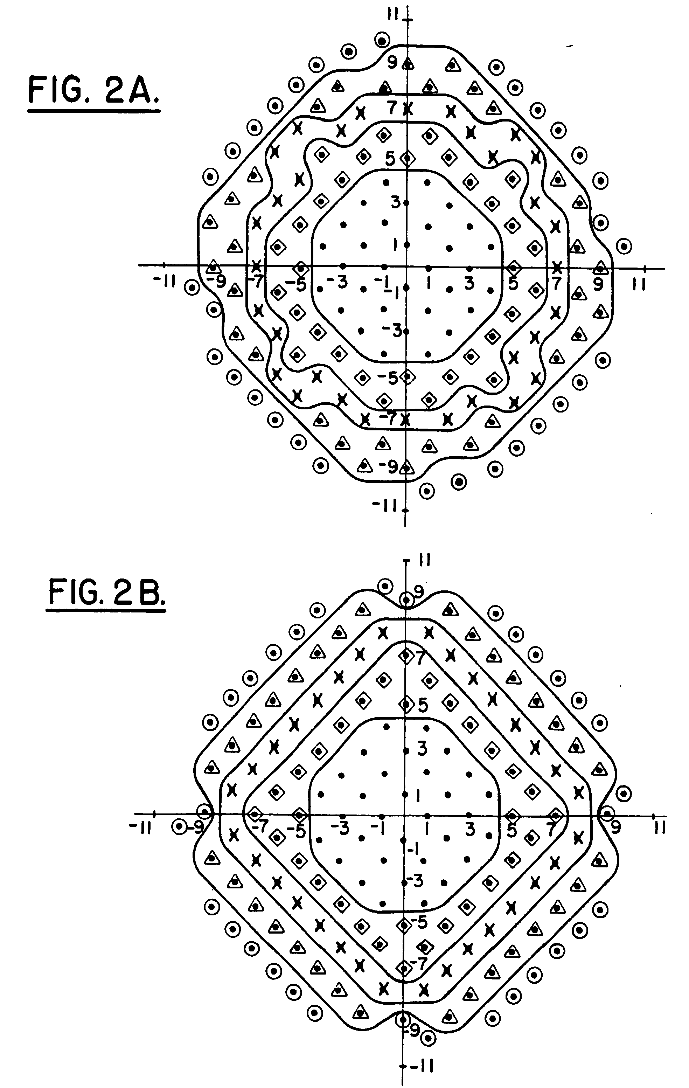

The four 2D coordinate pairs which represent the twenty-nine bits, and which are received at a receiver (not shown) and decoded into the original twenty-eight bits, are chosen from four 2D constellations. In accord with the first preferred embodiment, each of the 2D constellations preferably has one hundred sixty points as shown in Figures 2a and 2b. With four 160 point constellations, up to 655,360,000 8D points can be represented. However, of the 8D points available, only a subset thereof of 536,870,912 (2²⁹) points are used to comprise the 8D constellation of the invention. The 8D points chosen are different than those of the previously referenced Wei patent.

In choosing the 2²⁹ 8D points, according to a preferred aspect of the invention, each one hundred and sixty point 2D constellation is divided into five groups of thirty-two points each. The five groups are preferably of different average energies and may be chosen in any of several manners. A first manner of choosing five groups of thirty-two points is to choose the set of the eight lowest energy points which are not 90, 180, or 270 degree rotations of each other, and to use those eight points and their 90, 180, and 270 degree rotations as a first group. From the remaining points, a second set of eight lowest energy points which are not 90, 180, or 270 degree rotations of each other are chosen, and those eight points and their 90, 180, and 270 degree rotations are used as a second group. Third, fourth and fifth groups are chosen in the same manner to provide a subdivided constellation as shown in Figure 2a.

A second manner of choosing five groups of thirty-two points is to divide the constellation geometrically so as to locate each group of points in five areas approximating five concentric "circles" or "rings" around an origin as shown in Figure 2b. It should be appreciated that the terms "circles" and "rings" are used loosely, as the group of points do not represent an area, but appear to all be located at relatively similar distances from the origin (i.e. they are of similar energies). If the geometric manner of choosing groups is utilized, care still must be taken to guarantee that the 90, 180, and 270 degree rotations of any given point are in the same group as the point. Thus, regardless of the manner of choosing groups, each group may be further subdivided (partitioned) into four subgroups each having eight points, with each subgroup of a given group being defined as representing a 90, 180 or 270 degree rotation of another subgroup of that group. It will be appreciated that partitioning may be accomplished and is a natural result of partitioning an entire 2D constellation into four rotations; the intersection of a rotation and a group defining a subgroup.

With each 2D constellation comprised of five thirty-two point groups, six hundred twenty-five (5⁴) "8D groupings" exist, with an 8D grouping defined as the Cartesian product of all the points of a given group of the first 2D constellation with all the points of a given group of the second 2D constellation with all the points of a given group of the third 2D constellation with all the points of a given group of the fourth 2D constellation. Because each 8D grouping represents 32⁴ (=2²⁰) 8D points, and because only 2²⁹ points need to be identified, it is evident that only 2⁹ (=512) of the six hundred twenty-five 8D groupings need be utilized as part of the 8D constellation. Thus, according to the preferred embodiment, the five hundred twelve lowest energy 8D groupings are utilized. Using the one hundred sixty point constellation divided into the five groups of thirty-two points as shown in Figure 2b, a listing of those five hundred twelve (0 - 511) lowest energy 8D groupings by their 2D "rings", and their relative energies is seen in the following chart.

| | | | | | |
|---|---|---|---|---|---|
| 0 | 1 | 1 | 1 | 1 | 40.000 |
| 1 | 2 | 1 | 1 | 1 | 62.000 |
| 2 | 1 | 2 | 1 | 1 | 62.000 |
| 3 | 1 | 1 | 2 | 1 | 62.000 |
| 4 | 1 | 1 | 1 | 2 | 62.000 |
| 5 | 3 | 1 | 1 | 1 | 81.000 |
| 6 | 1 | 3 | 1 | 1 | 81.000 |
| 7 | 1 | 1 | 3 | 1 | 81.000 |
| 8 | 1 | 1 | 1 | 3 | 81.000 |
| 9 | 2 | 2 | 1 | 1 | 84.000 |
| 10 | 2 | 1 | 2 | 1 | 84.000 |
| 11 | 2 | 1 | 1 | 2 | 84.000 |
| 12 | 1 | 2 | 2 | 1 | 84.000 |
| 13 | 1 | 2 | 1 | 2 | 84.000 |
| 14 | 1 | 1 | 2 | 2 | 84.000 |
| 15 | 4 | 1 | 1 | 1 | 101.000 |
| 16 | 1 | 4 | 1 | 1 | 101.000 |
| 17 | 1 | 1 | 4 | 1 | 101.000 |
| 18 | 1 | 1 | 1 | 4 | 101.000 |
| 19 | 3 | 2 | 1 | 1 | 103.000 |
| 20 | 3 | 1 | 2 | 1 | 103.000 |
| 21 | 3 | 1 | 1 | 2 | 103.000 |
| 22 | 2 | 3 | 1 | 1 | 103.000 |
| 23 | 2 | 1 | 3 | 1 | 103.000 |
| 24 | 2 | 1 | 1 | 3 | 103.000 |
| 25 | 1 | 3 | 2 | 1 | 103.000 |
| 26 | 1 | 3 | 1 | 2 | 103.000 |
| 27 | 1 | 2 | 3 | 1 | 103.000 |
| 28 | 1 | 2 | 1 | 3 | 103.000 |
| 29 | 1 | 1 | 3 | 2 | 103.000 |
| 30 | 1 | 1 | 2 | 3 | 103.000 |
| 31 | 2 | 2 | 2 | 1 | 106.000 |
| 32 | 2 | 2 | 1 | 2 | 106.000 |
| 33 | 2 | 1 | 2 | 2 | 106.000 |
| 34 | 1 | 2 | 2 | 2 | 106.000 |
| 35 | 5 | 1 | 1 | 1 | 120.500 |
| 36 | 1 | 5 | 1 | 1 | 120.500 |
| 37 | 1 | 1 | 5 | 1 | 120.500 |
| 38 | 1 | 1 | 1 | 5 | 120.500 |
| 39 | 3 | 3 | 1 | 1 | 122.000 |
| 40 | 3 | 1 | 3 | 1 | 122.000 |
| 41 | 3 | 1 | 1 | 3 | 122.000 |
| 42 | 1 | 3 | 3 | 1 | 122.000 |
| 43 | 1 | 3 | 1 | 3 | 122.000 |
| 44 | 1 | 1 | 3 | 3 | 122.000 |
| 45 | 4 | 2 | 1 | 1 | 123.000 |
| 46 | 4 | 1 | 2 | 1 | 123.000 |
| 47 | 4 | 1 | 1 | 2 | 123.000 |
| 48 | 2 | 4 | 1 | 1 | 123.000 |
| 49 | 2 | 1 | 4 | 1 | 123.000 |
| 50 | 2 | 1 | 1 | 4 | 123.000 |
| 51 | 1 | 4 | 2 | 1 | 123.000 |
| 52 | 1 | 4 | 1 | 2 | 123.000 |
| 53 | 1 | 2 | 4 | 1 | 123.000 |
| 54 | 1 | 2 | 1 | 4 | 123.000 |
| 55 | 1 | 1 | 4 | 2 | 123.000 |
| 56 | 1 | 1 | 2 | 4 | 123.000 |
| 57 | 3 | 2 | 2 | 1 | 125.000 |
| 58 | 3 | 2 | 1 | 2 | 125.000 |
| 59 | 3 | 1 | 2 | 2 | 125.000 |
| 60 | 2 | 3 | 2 | 1 | 125.000 |
| 61 | 2 | 3 | 1 | 2 | 125.000 |
| 62 | 2 | 2 | 3 | 1 | 125.000 |
| 63 | 2 | 2 | 1 | 3 | 125.000 |
| 64 | 2 | 1 | 3 | 2 | 125.000 |
| 65 | 2 | 1 | 2 | 3 | 125.000 |
| 66 | 1 | 3 | 2 | 2 | 125.000 |
| 67 | 1 | 2 | 3 | 2 | 125.000 |
| 68 | 1 | 2 | 2 | 3 | 125.000 |
| 69 | 2 | 2 | 2 | 2 | 128.000 |
| 70 | 4 | 3 | 1 | 1 | 142.000 |
| 71 | 4 | 1 | 3 | 1 | 142.000 |
| 72 | 4 | 1 | 1 | 3 | 142.000 |
| 73 | 3 | 4 | 1 | 1 | 142.000 |
| 74 | 3 | 1 | 4 | 1 | 142.000 |
| 75 | 3 | 1 | 1 | 4 | 142.000 |
| 76 | 1 | 4 | 3 | 1 | 142.000 |
| 77 | 1 | 4 | 1 | 3 | 142.000 |
| 78 | 1 | 3 | 4 | 1 | 142.000 |
| 79 | 1 | 3 | 1 | 4 | 142.000 |
| 80 | 1 | 1 | 4 | 3 | 142.000 |
| 81 | 1 | 1 | 3 | 4 | 142.000 |
| 82 | 5 | 2 | 1 | 1 | 142.500 |
| 83 | 5 | 1 | 2 | 1 | 142.500 |
| 84 | 5 | 1 | 1 | 2 | 142.500 |
| 85 | 2 | 5 | 1 | 1 | 142.500 |
| 86 | 2 | 1 | 5 | 1 | 142.500 |
| 87 | 2 | 1 | 1 | 5 | 142.500 |
| 88 | 1 | 5 | 2 | 1 | 142.500 |
| 89 | 1 | 5 | 1 | 2 | 142.500 |
| 90 | 1 | 2 | 5 | 1 | 142.500 |
| 91 | 1 | 2 | 1 | 5 | 142.500 |
| 92 | 1 | 1 | 5 | 2 | 142.500 |
| 93 | 1 | 1 | 2 | 5 | 142.500 |
| 94 | 3 | 3 | 2 | 1 | 144.000 |
| 95 | 3 | 3 | 1 | 2 | 144.000 |
| 96 | 3 | 2 | 3 | 1 | 144.000 |
| 97 | 3 | 2 | 1 | 3 | 144.000 |
| 98 | 3 | 1 | 3 | 2 | 144.000 |
| 99 | 3 | 1 | 2 | 3 | 144.000 |
| 100 | 2 | 3 | 3 | 1 | 144.000 |
| 101 | 2 | 3 | 1 | 3 | 144.000 |
| 102 | 2 | 1 | 3 | 3 | 144.000 |
| 103 | 1 | 3 | 3 | 2 | 144.000 |
| 104 | 1 | 3 | 2 | 3 | 144.000 |
| 105 | 1 | 2 | 3 | 3 | 144.000 |
| 106 | 4 | 2 | 2 | 1 | 145.000 |
| 107 | 4 | 2 | 1 | 2 | 145.000 |
| 108 | 4 | 1 | 2 | 2 | 145.000 |
| 109 | 2 | 4 | 2 | 1 | 145.000 |
| 110 | 2 | 4 | 1 | 2 | 145.000 |
| 111 | 2 | 2 | 4 | 1 | 145.000 |
| 112 | 2 | 2 | 1 | 4 | 145.000 |
| 113 | 2 | 1 | 4 | 2 | 145.000 |
| 114 | 2 | 1 | 2 | 4 | 145.000 |
| 115 | 1 | 4 | 2 | 2 | 145.000 |
| 116 | 1 | 2 | 4 | 2 | 145.000 |
| 117 | 1 | 2 | 2 | 4 | 145.000 |
| 118 | 3 | 2 | 2 | 2 | 147.000 |
| 119 | 2 | 3 | 2 | 2 | 147.000 |
| 120 | 2 | 2 | 3 | 2 | 147.000 |
| 121 | 2 | 2 | 2 | 3 | 147.000 |
| 122 | 5 | 3 | 1 | 1 | 161.500 |
| 123 | 5 | 1 | 3 | 1 | 161.500 |
| 124 | 5 | 1 | 1 | 3 | 161.500 |
| 125 | 3 | 5 | 1 | 1 | 161.500 |
| 126 | 3 | 1 | 5 | 1 | 161.500 |
| 127 | 3 | 1 | 1 | 5 | 161.500 |
| 128 | 1 | 5 | 3 | 1 | 161.500 |
| 129 | 1 | 5 | 1 | 3 | 161.500 |
| 130 | 1 | 3 | 5 | 1 | 161.500 |
| 131 | 1 | 3 | 1 | 5 | 161.500 |
| 132 | 1 | 1 | 5 | 3 | 161.500 |
| 133 | 1 | 1 | 3 | 5 | 161.500 |
| 134 | 4 | 4 | 1 | 1 | 162.000 |
| 135 | 4 | 1 | 4 | 1 | 162.000 |
| 136 | 4 | 1 | 1 | 4 | 162.000 |
| 137 | 1 | 4 | 4 | 1 | 162.000 |
| 138 | 1 | 4 | 1 | 4 | 162.000 |
| 139 | 1 | 1 | 4 | 4 | 162.000 |
| 140 | 3 | 3 | 3 | 1 | 163.000 |
| 141 | 3 | 3 | 1 | 3 | 163.000 |
| 142 | 3 | 1 | 3 | 3 | 163.000 |
| 143 | 1 | 3 | 3 | 3 | 163.000 |
| 144 | 4 | 3 | 2 | 1 | 164.000 |
| 145 | 4 | 3 | 1 | 2 | 164.000 |
| 146 | 4 | 2 | 3 | 1 | 164.000 |
| 147 | 4 | 2 | 1 | 3 | 164.000 |
| 148 | 4 | 1 | 3 | 2 | 164.000 |
| 149 | 4 | 1 | 2 | 3 | 164.000 |
| 150 | 3 | 4 | 2 | 1 | 164.000 |
| 151 | 3 | 4 | 1 | 2 | 164.000 |
| 152 | 3 | 2 | 4 | 1 | 164.000 |
| 153 | 3 | 2 | 1 | 4 | 164.000 |
| 154 | 3 | 1 | 4 | 2 | 164.000 |
| 155 | 3 | 1 | 2 | 4 | 164.000 |
| 156 | 2 | 4 | 3 | 1 | 164.000 |
| 157 | 2 | 4 | 1 | 3 | 164.000 |
| 158 | 2 | 3 | 4 | 1 | 164.000 |
| 159 | 2 | 3 | 1 | 4 | 164.000 |
| 160 | 2 | 1 | 4 | 3 | 164.000 |
| 161 | 2 | 1 | 3 | 4 | 164.000 |
| 162 | 1 | 4 | 3 | 2 | 164.000 |
| 163 | 1 | 4 | 2 | 3 | 164.000 |
| 164 | 1 | 3 | 4 | 2 | 164.000 |
| 165 | 1 | 3 | 2 | 4 | 164.000 |
| 166 | 1 | 2 | 4 | 3 | 164.000 |
| 167 | 1 | 2 | 3 | 4 | 164.000 |
| 168 | 5 | 2 | 2 | 1 | 164.500 |
| 169 | 5 | 2 | 1 | 2 | 164.500 |
| 170 | 5 | 1 | 2 | 2 | 164.500 |
| 171 | 2 | 5 | 2 | 1 | 164.500 |
| 172 | 2 | 5 | 1 | 2 | 164.500 |
| 173 | 2 | 2 | 5 | 1 | 164.500 |
| 174 | 2 | 2 | 1 | 5 | 164.500 |
| 175 | 2 | 1 | 5 | 2 | 164.500 |
| 176 | 2 | 1 | 2 | 5 | 164.500 |
| 177 | 1 | 5 | 2 | 2 | 164.500 |
| 178 | 1 | 2 | 5 | 2 | 164.500 |
| 179 | 1 | 2 | 2 | 5 | 164.500 |
| 180 | 3 | 3 | 2 | 2 | 166.000 |
| 181 | 3 | 2 | 3 | 2 | 166.000 |
| 182 | 3 | 2 | 2 | 3 | 166.000 |
| 183 | 2 | 3 | 3 | 2 | 166.000 |
| 184 | 2 | 3 | 2 | 3 | 166.000 |
| 185 | 2 | 2 | 3 | 3 | 166.000 |
| 186 | 4 | 2 | 2 | 2 | 167.000 |
| 187 | 2 | 4 | 2 | 2 | 167.000 |
| 188 | 2 | 2 | 4 | 2 | 167.000 |
| 189 | 2 | 2 | 2 | 4 | 167.000 |
| 190 | 5 | 4 | 1 | 1 | 181.500 |
| 191 | 5 | 1 | 4 | 1 | 181.500 |
| 192 | 5 | 1 | 1 | 4 | 181.500 |
| 193 | 4 | 5 | 1 | 1 | 181.500 |
| 194 | 4 | 1 | 5 | 1 | 181.500 |
| 195 | 4 | 1 | 1 | 5 | 181.500 |
| 196 | 1 | 5 | 4 | 1 | 181.500 |
| 197 | 1 | 5 | 1 | 4 | 181.500 |
| 198 | 1 | 4 | 5 | 1 | 181.500 |
| 199 | 1 | 4 | 1 | 5 | 181.500 |
| 200 | 1 | 1 | 5 | 4 | 181.500 |
| 201 | 1 | 1 | 4 | 5 | 181.500 |
| 202 | 4 | 3 | 3 | 1 | 183.000 |
| 203 | 4 | 3 | 1 | 3 | 183.000 |
| 204 | 4 | 1 | 3 | 3 | 183.000 |
| 205 | 3 | 4 | 3 | 1 | 183.000 |
| 206 | 3 | 4 | 1 | 3 | 183.000 |
| 207 | 3 | 3 | 4 | 1 | 183.000 |
| 208 | 3 | 3 | 1 | 4 | 183.000 |
| 209 | 3 | 1 | 4 | 3 | 183.000 |
| 210 | 3 | 1 | 3 | 4 | 183.000 |
| 211 | 1 | 4 | 3 | 3 | 183.000 |
| 212 | 1 | 3 | 4 | 3 | 183.000 |
| 213 | 1 | 3 | 3 | 4 | 183.000 |
| 214 | 5 | 3 | 2 | 1 | 183.500 |
| 215 | 5 | 3 | 1 | 2 | 183.500 |
| 216 | 5 | 2 | 3 | 1 | 183.500 |
| 217 | 5 | 2 | 1 | 3 | 183.500 |
| 218 | 5 | 1 | 3 | 2 | 183.500 |
| 219 | 5 | 1 | 2 | 3 | 183.500 |
| 220 | 3 | 5 | 2 | 1 | 183.500 |
| 221 | 3 | 5 | 1 | 2 | 183.500 |
| 222 | 3 | 2 | 5 | 1 | 183.500 |
| 223 | 3 | 2 | 1 | 5 | 183.500 |
| 224 | 3 | 1 | 5 | 2 | 183.500 |
| 225 | 3 | 1 | 2 | 5 | 183.500 |
| 226 | 2 | 5 | 3 | 1 | 183.500 |
| 227 | 2 | 5 | 1 | 3 | 183.500 |
| 228 | 2 | 3 | 5 | 1 | 183.500 |
| 229 | 2 | 3 | 1 | 5 | 183.500 |
| 230 | 2 | 1 | 5 | 3 | 183.500 |
| 231 | 2 | 1 | 3 | 5 | 183.500 |
| 232 | 1 | 5 | 3 | 2 | 183.500 |
| 233 | 1 | 5 | 2 | 3 | 183.500 |
| 234 | 1 | 3 | 5 | 2 | 183.500 |
| 235 | 1 | 3 | 2 | 5 | 183.500 |
| 236 | 1 | 2 | 5 | 3 | 183.500 |
| 237 | 1 | 2 | 3 | 5 | 183.500 |
| 238 | 4 | 4 | 2 | 1 | 184.000 |
| 239 | 4 | 4 | 1 | 2 | 184.000 |
| 240 | 4 | 2 | 4 | 1 | 184.000 |
| 241 | 4 | 2 | 1 | 4 | 184.000 |
| 242 | 4 | 1 | 4 | 2 | 184.000 |
| 243 | 4 | 1 | 2 | 4 | 184.000 |
| 244 | 2 | 4 | 4 | 1 | 184.000 |
| 245 | 2 | 4 | 1 | 4 | 184.000 |
| 246 | 2 | 1 | 4 | 4 | 184.000 |
| 247 | 1 | 4 | 4 | 2 | 184.000 |
| 248 | 1 | 4 | 2 | 4 | 184.000 |
| 249 | 1 | 2 | 4 | 4 | 184.000 |
| 250 | 3 | 3 | 3 | 2 | 185.000 |
| 251 | 3 | 3 | 2 | 3 | 185.000 |
| 252 | 3 | 2 | 3 | 3 | 185.000 |
| 253 | 2 | 3 | 3 | 3 | 185.000 |
| 254 | 4 | 3 | 2 | 2 | 186.000 |
| 255 | 4 | 2 | 3 | 2 | 186.000 |
| 256 | 4 | 2 | 2 | 3 | 186.000 |
| 257 | 3 | 4 | 2 | 2 | 186.000 |
| 258 | 3 | 2 | 4 | 2 | 186.000 |
| 259 | 3 | 2 | 2 | 4 | 186.000 |
| 260 | 2 | 4 | 3 | 2 | 186.000 |
| 261 | 2 | 4 | 2 | 3 | 186.000 |
| 262 | 2 | 3 | 4 | 2 | 186.000 |
| 263 | 2 | 3 | 2 | 4 | 186.000 |
| 264 | 2 | 2 | 4 | 3 | 186.000 |
| 265 | 2 | 2 | 3 | 4 | 186.000 |
| 266 | 5 | 2 | 2 | 2 | 186.500 |
| 267 | 2 | 5 | 2 | 2 | 186.500 |
| 268 | 2 | 2 | 5 | 2 | 186.500 |
| 269 | 2 | 2 | 2 | 5 | 186.500 |
| 270 | 5 | 5 | 1 | 1 | 201.000 |
| 271 | 5 | 1 | 5 | 1 | 201.000 |
| 272 | 5 | 1 | 1 | 5 | 201.000 |
| 273 | 1 | 5 | 5 | 1 | 201.000 |
| 274 | 1 | 5 | 1 | 5 | 201.000 |
| 275 | 1 | 1 | 5 | 5 | 201.000 |
| 276 | 5 | 3 | 3 | 1 | 202.500 |
| 277 | 5 | 3 | 1 | 3 | 202.500 |
| 278 | 5 | 1 | 3 | 3 | 202.500 |
| 279 | 3 | 5 | 3 | 1 | 202.500 |
| 280 | 3 | 5 | 1 | 3 | 202.500 |
| 281 | 3 | 3 | 5 | 1 | 202.500 |
| 282 | 3 | 3 | 1 | 5 | 202.500 |
| 283 | 3 | 1 | 5 | 3 | 202.500 |
| 284 | 3 | 1 | 3 | 5 | 202.500 |
| 285 | 1 | 5 | 3 | 3 | 202.500 |
| 286 | 1 | 3 | 5 | 3 | 202.500 |
| 287 | 1 | 3 | 3 | 5 | 202.500 |
| 288 | 4 | 4 | 3 | 1 | 203.000 |
| 289 | 4 | 4 | 1 | 3 | 203.000 |
| 290 | 4 | 3 | 4 | 1 | 203.000 |
| 291 | 4 | 3 | 1 | 4 | 203.000 |
| 292 | 4 | 1 | 4 | 3 | 203.000 |
| 293 | 4 | 1 | 3 | 4 | 203.000 |
| 294 | 3 | 4 | 4 | 1 | 203.000 |
| 295 | 3 | 4 | 1 | 4 | 203.000 |
| 296 | 3 | 1 | 4 | 4 | 203.000 |
| 297 | 1 | 4 | 4 | 3 | 203.000 |
| 298 | 1 | 4 | 3 | 4 | 203.000 |
| 299 | 1 | 3 | 4 | 4 | 203.000 |
| 300 | 5 | 4 | 2 | 1 | 203.500 |
| 301 | 5 | 4 | 1 | 2 | 203.500 |
| 302 | 5 | 2 | 4 | 1 | 203.500 |
| 303 | 5 | 2 | 1 | 4 | 203.500 |
| 304 | 5 | 1 | 4 | 2 | 203.500 |
| 305 | 5 | 1 | 2 | 4 | 203.500 |
| 306 | 4 | 5 | 2 | 1 | 203.500 |
| 307 | 4 | 5 | 1 | 2 | 203.500 |
| 308 | 4 | 2 | 5 | 1 | 203.500 |
| 309 | 4 | 2 | 1 | 5 | 203.500 |
| 310 | 4 | 1 | 5 | 2 | 203.500 |
| 311 | 4 | 1 | 2 | 5 | 203.500 |
| 312 | 2 | 5 | 4 | 1 | 203.500 |
| 313 | 2 | 5 | 1 | 4 | 203.500 |
| 314 | 2 | 4 | 5 | 1 | 203.500 |
| 315 | 2 | 4 | 1 | 5 | 203.500 |
| 316 | 2 | 1 | 5 | 4 | 203.500 |
| 317 | 2 | 1 | 4 | 5 | 203.500 |
| 318 | 1 | 5 | 4 | 2 | 203.500 |
| 319 | 1 | 5 | 2 | 4 | 203.500 |
| 320 | 1 | 4 | 5 | 2 | 203.500 |
| 321 | 1 | 4 | 2 | 5 | 203.500 |
| 322 | 1 | 2 | 5 | 4 | 203.500 |
| 323 | 1 | 2 | 4 | 5 | 203.500 |
| 324 | 3 | 3 | 3 | 3 | 204.000 |
| 325 | 4 | 3 | 3 | 2 | 205.000 |
| 326 | 4 | 3 | 2 | 3 | 205.000 |
| 327 | 4 | 2 | 3 | 3 | 205.000 |
| 328 | 3 | 4 | 3 | 2 | 205.000 |
| 329 | 3 | 4 | 2 | 3 | 205.000 |
| 330 | 3 | 3 | 4 | 2 | 205.000 |
| 331 | 3 | 3 | 2 | 4 | 205.000 |
| 332 | 3 | 2 | 4 | 3 | 205.000 |
| 333 | 3 | 2 | 3 | 4 | 205.000 |
| 334 | 2 | 4 | 3 | 3 | 205.000 |
| 335 | 2 | 3 | 4 | 3 | 205.000 |
| 336 | 2 | 3 | 3 | 4 | 205.000 |
| 337 | 5 | 3 | 2 | 2 | 205.500 |
| 338 | 5 | 2 | 3 | 2 | 205.500 |
| 339 | 5 | 2 | 2 | 3 | 205.500 |
| 340 | 3 | 5 | 2 | 2 | 205.500 |
| 341 | 3 | 2 | 5 | 2 | 205.500 |
| 342 | 3 | 2 | 2 | 5 | 205.500 |
| 343 | 2 | 5 | 3 | 2 | 205.500 |
| 344 | 2 | 5 | 2 | 3 | 205.500 |
| 345 | 2 | 3 | 5 | 2 | 205.500 |
| 346 | 2 | 3 | 2 | 5 | 205.500 |
| 347 | 2 | 2 | 5 | 3 | 205.500 |
| 348 | 2 | 2 | 3 | 5 | 205.500 |
| 349 | 4 | 4 | 2 | 2 | 206.000 |
| 350 | 4 | 2 | 4 | 2 | 206.000 |
| 351 | 4 | 2 | 2 | 4 | 206.000 |
| 352 | 2 | 4 | 4 | 2 | 206.000 |
| 353 | 2 | 4 | 2 | 4 | 206.000 |
| 354 | 2 | 2 | 4 | 4 | 206.000 |
| 355 | 5 | 4 | 3 | 1 | 222.500 |
| 356 | 5 | 4 | 1 | 3 | 222.500 |
| 357 | 5 | 3 | 4 | 1 | 222.500 |
| 358 | 5 | 3 | 1 | 4 | 222.500 |
| 359 | 5 | 1 | 4 | 3 | 222.500 |
| 360 | 5 | 1 | 3 | 4 | 222.500 |
| 361 | 4 | 5 | 3 | 1 | 222.500 |
| 362 | 4 | 5 | 1 | 3 | 222.500 |
| 363 | 4 | 3 | 5 | 1 | 222.500 |
| 364 | 4 | 3 | 1 | 5 | 222.500 |
| 365 | 4 | 1 | 5 | 3 | 222.500 |
| 366 | 4 | 1 | 3 | 5 | 222.500 |
| 367 | 3 | 5 | 4 | 1 | 222.500 |
| 368 | 3 | 5 | 1 | 4 | 222.500 |
| 369 | 3 | 4 | 5 | 1 | 222.500 |
| 370 | 3 | 4 | 1 | 5 | 222.500 |
| 371 | 3 | 1 | 5 | 4 | 222.500 |
| 372 | 3 | 1 | 4 | 5 | 222.500 |
| 373 | 1 | 5 | 4 | 3 | 222.500 |
| 374 | 1 | 5 | 3 | 4 | 222.500 |
| 375 | 1 | 4 | 5 | 3 | 222.500 |
| 376 | 1 | 4 | 3 | 5 | 222.500 |
| 377 | 1 | 3 | 5 | 4 | 222.500 |
| 378 | 1 | 3 | 4 | 5 | 222.500 |
| 379 | 5 | 5 | 2 | 1 | 223.000 |
| 380 | 5 | 5 | 1 | 2 | 223.000 |
| 381 | 5 | 2 | 5 | 1 | 223.000 |
| 382 | 5 | 2 | 1 | 5 | 223.000 |
| 383 | 5 | 1 | 5 | 2 | 223.000 |
| 384 | 5 | 1 | 2 | 5 | 223.000 |
| 385 | 4 | 4 | 4 | 1 | 223.000 |
| 386 | 4 | 4 | 1 | 4 | 223.000 |
| 387 | 4 | 1 | 4 | 4 | 223.000 |
| 388 | 2 | 5 | 5 | 1 | 223.000 |
| 389 | 2 | 5 | 1 | 5 | 223.000 |
| 390 | 2 | 1 | 5 | 5 | 223.000 |
| 391 | 1 | 5 | 5 | 2 | 223.000 |
| 392 | 1 | 5 | 2 | 5 | 223.000 |
| 393 | 1 | 4 | 4 | 4 | 223.000 |
| 394 | 1 | 2 | 5 | 5 | 223.000 |
| 395 | 4 | 3 | 3 | 3 | 224.000 |
| 396 | 3 | 4 | 3 | 3 | 224.000 |
| 397 | 3 | 3 | 4 | 3 | 224.000 |
| 398 | 3 | 3 | 3 | 4 | 224.000 |
| 399 | 5 | 3 | 3 | 2 | 224.500 |
| 400 | 5 | 3 | 2 | 3 | 224.500 |
| 401 | 5 | 2 | 3 | 3 | 224.500 |
| 402 | 3 | 5 | 3 | 2 | 224.500 |
| 403 | 3 | 5 | 2 | 3 | 224.500 |
| 404 | 3 | 3 | 5 | 2 | 224.500 |
| 405 | 3 | 3 | 2 | 5 | 224.500 |
| 406 | 3 | 2 | 5 | 3 | 224.500 |
| 407 | 3 | 2 | 3 | 5 | 224.500 |
| 408 | 2 | 5 | 3 | 3 | 224.500 |
| 409 | 2 | 3 | 5 | 3 | 224.500 |
| 410 | 2 | 3 | 3 | 5 | 224.500 |
| 411 | 4 | 4 | 3 | 2 | 225.000 |
| 412 | 4 | 4 | 2 | 3 | 225.000 |
| 413 | 4 | 3 | 4 | 2 | 225.000 |
| 414 | 4 | 3 | 2 | 4 | 225.000 |
| 415 | 4 | 2 | 4 | 3 | 225.000 |
| 416 | 4 | 2 | 3 | 4 | 225.000 |
| 417 | 3 | 4 | 4 | 2 | 225.000 |
| 418 | 3 | 4 | 2 | 4 | 225.000 |
| 419 | 3 | 2 | 4 | 4 | 225.000 |
| 420 | 2 | 4 | 4 | 3 | 225.000 |
| 421 | 2 | 4 | 3 | 4 | 225.000 |
| 422 | 2 | 3 | 4 | 4 | 225.000 |
| 423 | 5 | 4 | 2 | 2 | 225.500 |
| 424 | 5 | 2 | 4 | 2 | 225.500 |
| 425 | 5 | 2 | 2 | 4 | 225.500 |
| 426 | 4 | 5 | 2 | 2 | 225.500 |
| 427 | 4 | 2 | 5 | 2 | 225.500 |
| 428 | 4 | 2 | 2 | 5 | 225.500 |
| 429 | 2 | 5 | 4 | 2 | 225.500 |
| 430 | 2 | 5 | 2 | 4 | 225.500 |
| 431 | 2 | 4 | 5 | 2 | 225.500 |
| 432 | 2 | 4 | 2 | 5 | 225.500 |
| 433 | 2 | 2 | 5 | 4 | 225.500 |
| 434 | 2 | 2 | 4 | 5 | 225.500 |
| 435 | 5 | 5 | 3 | 1 | 242.000 |
| 436 | 5 | 5 | 1 | 3 | 242.000 |
| 437 | 5 | 3 | 5 | 1 | 242.000 |
| 438 | 5 | 3 | 1 | 5 | 242.000 |
| 439 | 5 | 1 | 5 | 3 | 242.000 |
| 440 | 5 | 1 | 3 | 5 | 242.000 |
| 441 | 3 | 5 | 5 | 1 | 242.000 |
| 442 | 3 | 5 | 1 | 5 | 242.000 |
| 443 | 3 | 1 | 5 | 5 | 242.000 |
| 444 | 1 | 5 | 5 | 3 | 242.000 |
| 445 | 1 | 5 | 3 | 5 | 242.000 |
| 446 | 1 | 3 | 5 | 5 | 242.000 |
| 447 | 5 | 4 | 4 | 1 | 242.500 |
| 448 | 5 | 4 | 1 | 4 | 242.500 |
| 449 | 5 | 1 | 4 | 4 | 242.500 |
| 450 | 4 | 5 | 4 | 1 | 242.500 |
| 451 | 4 | 5 | 1 | 4 | 242.500 |
| 452 | 4 | 4 | 5 | 1 | 242.500 |
| 453 | 4 | 4 | 1 | 5 | 242.500 |
| 454 | 4 | 1 | 5 | 4 | 242.500 |
| 455 | 4 | 1 | 4 | 5 | 242.500 |
| 456 | 1 | 5 | 4 | 4 | 242.500 |
| 457 | 1 | 4 | 5 | 4 | 242.500 |
| 458 | 1 | 4 | 4 | 5 | 242.500 |
| 459 | 5 | 3 | 3 | 3 | 243.500 |
| 460 | 3 | 5 | 3 | 3 | 243.500 |
| 461 | 3 | 3 | 5 | 3 | 243.500 |
| 462 | 3 | 3 | 3 | 5 | 243.500 |
| 463 | 4 | 4 | 3 | 3 | 244.000 |
| 464 | 4 | 3 | 4 | 3 | 244.000 |
| 465 | 4 | 3 | 3 | 4 | 244.000 |
| 456 | 3 | 4 | 4 | 3 | 244.000 |
| 467 | 3 | 4 | 3 | 4 | 244.000 |
| 468 | 3 | 3 | 4 | 4 | 244.000 |
| 469 | 5 | 4 | 3 | 2 | 244.500 |
| 470 | 5 | 4 | 2 | 3 | 244.500 |
| 471 | 5 | 3 | 4 | 2 | 244.500 |
| 472 | 5 | 3 | 2 | 4 | 244.500 |
| 473 | 5 | 2 | 4 | 3 | 244.500 |
| 474 | 5 | 2 | 3 | 4 | 244.500 |
| 475 | 4 | 5 | 3 | 2 | 244.500 |
| 476 | 4 | 5 | 2 | 3 | 244.500 |
| 477 | 4 | 3 | 5 | 2 | 244.500 |
| 478 | 4 | 3 | 2 | 5 | 244.500 |
| 479 | 4 | 2 | 5 | 3 | 244.500 |
| 480 | 4 | 2 | 3 | 5 | 244.500 |
| 481 | 3 | 5 | 4 | 2 | 244.500 |
| 482 | 3 | 5 | 2 | 4 | 244.500 |
| 483 | 3 | 4 | 5 | 2 | 244.500 |
| 484 | 3 | 4 | 2 | 5 | 244.500 |
| 485 | 3 | 2 | 5 | 4 | 244.500 |
| 486 | 3 | 2 | 4 | 5 | 244.500 |
| 487 | 2 | 5 | 4 | 3 | 244.500 |
| 488 | 2 | 5 | 3 | 4 | 244.500 |
| 489 | 2 | 4 | 5 | 3 | 244.500 |
| 490 | 2 | 4 | 3 | 5 | 244.500 |
| 491 | 2 | 3 | 5 | 4 | 244.500 |
| 492 | 2 | 3 | 4 | 5 | 244.500 |
| 493 | 5 | 5 | 2 | 2 | 245.000 |
| 494 | 5 | 2 | 5 | 2 | 245.000 |
| 495 | 5 | 2 | 2 | 5 | 245.000 |
| 496 | 4 | 4 | 4 | 2 | 245.000 |
| 497 | 4 | 4 | 2 | 4 | 245.000 |
| 498 | 4 | 2 | 4 | 4 | 245.000 |
| 499 | 2 | 5 | 5 | 2 | 245.000 |
| 500 | 2 | 5 | 2 | 5 | 245.000 |
| 501 | 2 | 4 | 4 | 4 | 245.000 |
| 502 | 2 | 2 | 5 | 5 | 245.000 |
| 503 | 5 | 4 | 1 | 5 | 262.000 |
| 504 | 5 | 1 | 5 | 4 | 262.000 |
| 505 | 5 | 1 | 4 | 5 | 262.000 |
| 506 | 4 | 5 | 5 | 1 | 262.000 |
| 507 | 4 | 5 | 1 | 5 | 262.000 |
| 508 | 4 | 1 | 5 | 5 | 262.000 |
| 509 | 1 | 5 | 5 | 4 | 262.000 |
| 510 | 1 | 5 | 4 | 5 | 262.000 |
| 511 | 1 | 4 | 5 | 5 | 262.000 |
| sum , avep 94962.0000000 185.4726563 | | | | | |

The union of these five hundred twelve lowest energy 8D groupings comprises the preferred 8D constellation of the first preferred embodiment of the instant invention.

As aforementioned with reference to Figure 1, four 2D points (coordinate pairs) which represent an 8D point of the preferred 8D constellation are generated by a mapper 30 from twenty-nine input bits. The twenty-nine bits input into the mapper define the 8D point in the following manner. Nine bits of the twenty-nine bits are used to identify in which of the five hundred twelve lowest energy 8D groupings the 8D point lies. The identified grouping provides a determined "ring" in each of the four 2D constellations. Then, eight additional bits of the twenty-nine bits (i.e. those eight bits which are generated by the differential encoder, convolutional encoder, and bit converter) are used to identify in which subgroups of the identified 8D grouping the 8D point lies. In other words, for each identified "ring", two bits are used to identify one of the four rotational subgroups, such that the 8D point is comprised of one of eight points in each 2D constellation. Then, the remaining twelve bits of the twenty-nine bits are used to identify among the points of the identified subgroups. In other words, three bits for each 2D constellation are utilized to choose among the eight remaining possible points of that 2D constellation.

It should be appreciated that the mapping technique described herein can be extended. Instead of dividing each one hundred sixty point 2D constellation into five rings of thirty-two points, the 2D constellations can each be divided into ten distinct energy rings of sixteen points each, with each ring of sixteen points being further divided into its four constituent rotational subgroups of four points each. With such an arrangement, the eight thousand one hundred ninety-six (2¹³) lowest energy groupings would be chosen from the ten thousand (10⁴) possible groupings to comprise the constellation. An 8D point would be chosen from the defined constellation by using thirteen bits to choose the grouping, eight bits to define the rotational subgroups, and the remaining eight bits (two per 2D constellation) to define the point.

While an extension of the mapping technique from five rings to ten rings does provide a slight additional signal/noise improvement, the additional memory and processor requirements currently well outweigh the advantages. Similarly, further extensions to twenty rings, etc. would result in yet smaller gain at the expense of yet additional memory and processor costs.

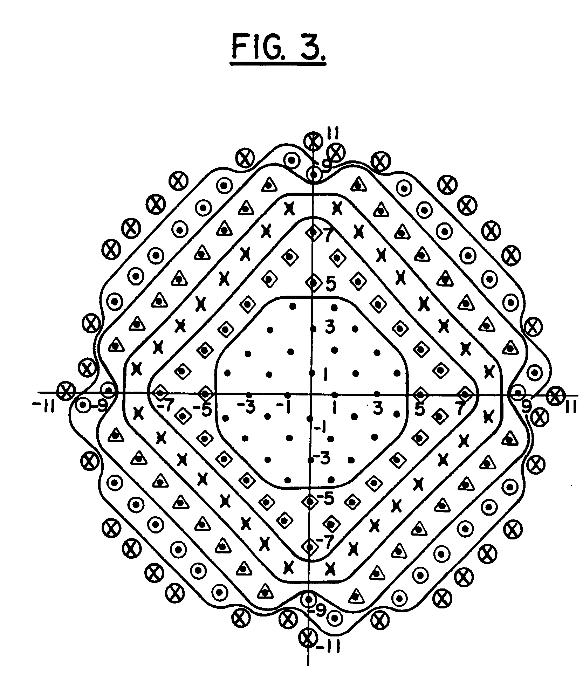

A different extension of the invention can be seen with reference to the second preferred embodiment. In the second preferred embodiment, the four 2D coordinate pairs which represent the twenty-nine bits, and which are received at a receiver (not shown) and decoded into the original twenty-eight bits, are chosen from four 2D constellations. Each of the 2D constellations preferably has one hundred ninety-two points as shown in Figure 3. With four 192 point constellations, up to 1,358,954,496 8D points can be represented. However, of the 8D points available, only a subset thereof of 536,870,912 (2²⁹) points are used to comprise the 8D constellation of the invention. The 8D points chosen are differently than those of the previously referenced Wei patent.

In choosing the 2²⁹ 8D points, according to a preferred aspect of the invention, each one hundred and ninety-two point 2D constellation is divided into six groups of thirty-two points each. The six groups are preferably of different average energies and may be chosen in an identical manner to that described above with reference to the first preferred embodiment, except that instead of five groups being chosen, six groups are chosen. Regardless of the manner of choosing groups, each group may be further subdivided (partitioned) into four subgroups each having eight points, with each subgroup of a given group being defined as representing a 90, 180 or 270 degree rotation of another subgroup of that group. It will be appreciated that partitioning may be accomplished and is a natural result of partitioning an entire 2D constellation into four rotations; the intersection of a rotation and a group defining a subgroup.

With each 2D constellation comprised of six thirty-two point groups, one thousand two hundred and ninety-six (6⁴) "8D groupings" exist, with an 8D grouping defined as the Cartesian product of all the points of a given group of the first 2D constellation with all the points of a given group of the second 2D constellation with all the points of a given group of the third 2D constellation with all the points of a given group of the fourth 2D constellation. Because each 8D grouping represents 32⁴ (=2²⁰) 8D points, and because only 2²⁹ points need to be identified, it is evident that only 2⁹ (=512) of the twelve hundred ninety-six 8D groupings need be utilized as part of the 8D constellation. Thus, according to the preferred embodiment, the five hundred twelve lowest energy 8D groupings are utilized. Using the one hundred ninety-two point constellation divided into the six groups of thirty-two points as shown in Figure 2, a listing of those five hundred twelve (0 - 511) lowest energy 8D groupings by their 2D "rings", and their relative energies (with ring "1" having an average energy of ten; ring "2", an average energy of thirty-two; ring "3", an average energy of fifty-one; ring "4", an average energy of seventy-one; ring "5", an average energy of ninety and one-half; and ring "6", an average energy of one hundred twelve and one-half) is as follows:

| GRP# | RING#'S | | | | PWR | GRP# | RING#'S | | | | PWR | GRP# | RING#'S | | | | PWR |
|---|---|---|---|---|---|---|---|---|---|---|---|---|---|---|---|---|---|
| 0 | 1 | 1 | 1 | 1 | 40.0 | 171 | 1 | 2 | 3 | 4 | 164.00 | 342 | 6 | 1 | 1 | 4 | 203.5 |
| 1 | 2 | 1 | 1 | 1 | 62.0 | 172 | 6 | 2 | 1 | 1 | 164.5 | 343 | 5 | 4 | 2 | 1 | 203.5 |
| 2 | 1 | 2 | 1 | 1 | 62.0 | 173 | 6 | 1 | 2 | 1 | 164.5 | 344 | 5 | 4 | 1 | 2 | 203.5 |
| 3 | 1 | 1 | 2 | 1 | 62.0 | 174 | 6 | 1 | 1 | 2 | 164.5 | 345 | 5 | 2 | 4 | 1 | 203.5 |
| 4 | 1 | 1 | 1 | 2 | 62.0 | 175 | 5 | 2 | 2 | 1 | 164.5 | 346 | 5 | 2 | 1 | 4 | 203.5 |
| 5 | 3 | 1 | 1 | 1 | 81.0 | 176 | 5 | 2 | 1 | 2 | 164.5 | 347 | 5 | 1 | 4 | 2 | 203.5 |
| 6 | 1 | 3 | 1 | 1 | 81.0 | 177 | 5 | 1 | 2 | 2 | 164.5 | 348 | 5 | 1 | 2 | 4 | 203.5 |
| 7 | 1 | 1 | 3 | 1 | 81.0 | 178 | 2 | 6 | 1 | 1 | 164.5 | 349 | 4 | 6 | 1 | 1 | 203.5 |
| 8 | 1 | 1 | 1 | 3 | 81.0 | 179 | 2 | 5 | 2 | 1 | 164.5 | 350 | 4 | 5 | 2 | 1 | 203.5 |
| 9 | 2 | 2 | 1 | 1 | 84.0 | 180 | 2 | 5 | 1 | 2 | 164.5 | 351 | 4 | 5 | 1 | 2 | 203.5 |
| 10 | 2 | 1 | 2 | 1 | 84.0 | 181 | 2 | 2 | 5 | 1 | 164.5 | 352 | 4 | 2 | 5 | 1 | 203.5 |
| 11 | 2 | 1 | 1 | 2 | 84.0 | 182 | 2 | 2 | 1 | 5 | 164.5 | 353 | 4 | 2 | 1 | 5 | 203.5 |
| 12 | 1 | 2 | 2 | 1 | 84.0 | 183 | 2 | 1 | 6 | 1 | 164.5 | 354 | 4 | 1 | 6 | 1 | 203.5 |
| 13 | 1 | 2 | 1 | 2 | 84.0 | 184 | 2 | 1 | 5 | 2 | 164.5 | 355 | 4 | 1 | 5 | 2 | 203.5 |
| 14 | 1 | 1 | 2 | 2 | 84.0 | 185 | 2 | 1 | 2 | 5 | 164.5 | 356 | 4 | 1 | 2 | 5 | 203.5 |
| 15 | 4 | 1 | 1 | 1 | 101.0 | 186 | 2 | 1 | 1 | 6 | 164.5 | 357 | 4 | 1 | 1 | 6 | 203.5 |
| 16 | 1 | 4 | 1 | 1 | 101.0 | 187 | 1 | 6 | 2 | 1 | 164.5 | 358 | 2 | 5 | 4 | 1 | 203.5 |
| 17 | 1 | 1 | 4 | 1 | 101.0 | 188 | 1 | 6 | 1 | 2 | 164.5 | 359 | 2 | 5 | 1 | 4 | 230.5 |
| 18 | 1 | 1 | 1 | 4 | 101.0 | 189 | 1 | 5 | 2 | 2 | 164.5 | 360 | 2 | 4 | 5 | 1 | 203.5 |
| 19 | 3 | 2 | 1 | 1 | 103.0 | 190 | 1 | 2 | 6 | 1 | 164.5 | 361 | 2 | 4 | 1 | 5 | 203.5 |
| 20 | 3 | 1 | 2 | 1 | 103.0 | 191 | 1 | 2 | 5 | 2 | 164.5 | 362 | 2 | 1 | 5 | 4 | 203.5 |
| 21 | 3 | 1 | 1 | 2 | 103.0 | 192 | 1 | 2 | 2 | 5 | 164.5 | 363 | 2 | 1 | 4 | 5 | 203.5 |
| 22 | 2 | 3 | 1 | 1 | 103.0 | 193 | 1 | 2 | 1 | 6 | 164.5 | 364 | 1 | 6 | 4 | 1 | 203.5 |
| 23 | 2 | 1 | 3 | 1 | 103.0 | 194 | 1 | 1 | 6 | 2 | 164.5 | 365 | 1 | 6 | 1 | 4 | 203.5 |
| 24 | 2 | 1 | 1 | 3 | 103.0 | 195 | 1 | 1 | 2 | 6 | 164.5 | 366 | 1 | 5 | 4 | 2 | 203.5 |
| 25 | 1 | 3 | 2 | 1 | 103.0 | 196 | 3 | 3 | 2 | 2 | 166.0 | 367 | 1 | 5 | 2 | 4 | 203.5 |
| 26 | 1 | 3 | 1 | 2 | 103.0 | 197 | 3 | 2 | 3 | 2 | 166.0 | 368 | 1 | 4 | 6 | 1 | 203.5 |
| 27 | 1 | 2 | 3 | 1 | 103.0 | 198 | 3 | 2 | 3 | 2 | 166.0 | 369 | 1 | 4 | 5 | 2 | 203.5 |
| 28 | 1 | 2 | 1 | 3 | 103.0 | 199 | 2 | 3 | 3 | 2 | 166.0 | 370 | 1 | 4 | 2 | 5 | 203.5 |
| 29 | 1 | 1 | 3 | 2 | 103.0 | 200 | 2 | 3 | 2 | 3 | 166.0 | 371 | 1 | 4 | 1 | 6 | 203.5 |
| 30 | 1 | 1 | 2 | 3 | 103.0 | 201 | 2 | 2 | 3 | 3 | 166.0 | 372 | 1 | 2 | 5 | 4 | 203.5 |
| 31 | 2 | 2 | 2 | 1 | 106.0 | 202 | 4 | 2 | 2 | 2 | 167.0 | 373 | 1 | 2 | 4 | 5 | 203.5 |
| 32 | 2 | 2 | 1 | 2 | 106.0 | 203 | 2 | 4 | 2 | 2 | 167.0 | 374 | 1 | 1 | 6 | 4 | 203.5 |
| 33 | 2 | 1 | 2 | 2 | 106.0 | 204 | 2 | 2 | 4 | 2 | 167.0 | 375 | 1 | 1 | 4 | 6 | 203.5 |
| 34 | 1 | 2 | 2 | 2 | 106.0 | 205 | 2 | 2 | 2 | 4 | 167.0 | 376 | 3 | 3 | 3 | 3 | 204.0 |
| 35 | 5 | 1 | 1 | 1 | 120.5 | 206 | 5 | 4 | 1 | 1 | 181.5 | 377 | 4 | 3 | 3 | 2 | 205.0 |
| 36 | 1 | 5 | 1 | 1 | 120.5 | 207 | 5 | 1 | 4 | 1 | 181.5 | 378 | 4 | 3 | 2 | 3 | 205.0 |
| 37 | 1 | 1 | 5 | 1 | 120.5 | 208 | 5 | 1 | 1 | 4 | 181.5 | 379 | 4 | 2 | 3 | 3 | 205.0 |
| 38 | 1 | 1 | 1 | 5 | 120.5 | 209 | 4 | 5 | 1 | 1 | 181.5 | 380 | 3 | 4 | 3 | 2 | 205.0 |
| 39 | 3 | 3 | 1 | 1 | 122.0 | 210 | 4 | 1 | 5 | 1 | 181.5 | 381 | 3 | 4 | 2 | 3 | 205.0 |
| 40 | 3 | 1 | 3 | 1 | 122.0 | 211 | 4 | 1 | 1 | 5 | 181.5 | 382 | 3 | 3 | 4 | 2 | 205.0 |
| 41 | 3 | 1 | 1 | 3 | 122.0 | 212 | 1 | 5 | 4 | 1 | 181.5 | 383 | 3 | 3 | 2 | 4 | 205.0 |
| 42 | 1 | 3 | 3 | 1 | 122.0 | 213 | 1 | 5 | 1 | 4 | 181.5 | 384 | 3 | 2 | 4 | 3 | 205.0 |
| 43 | 1 | 3 | 1 | 3 | 122.0 | 214 | 1 | 4 | 5 | 1 | 181.5 | 385 | 3 | 2 | 3 | 4 | 205.0 |
| 44 | 1 | 1 | 3 | 3 | 122.0 | 215 | 1 | 4 | 1 | 5 | 181.5 | 386 | 2 | 4 | 3 | 3 | 205.0 |
| 45 | 4 | 2 | 1 | 1 | 123.0 | 216 | 1 | 1 | 5 | 4 | 181.5 | 387 | 2 | 3 | 4 | 3 | 205.0 |
| 46 | 4 | 1 | 2 | 1 | 123.0 | 217 | 1 | 1 | 4 | 5 | 181.5 | 388 | 2 | 3 | 3 | 4 | 205.0 |
| 47 | 4 | 1 | 1 | 2 | 123.0 | 218 | 4 | 3 | 3 | 1 | 183.0 | 389 | 6 | 3 | 2 | 1 | 205.5 |
| 48 | 2 | 4 | 1 | 1 | 123.0 | 219 | 4 | 3 | 1 | 3 | 183.0 | 390 | 6 | 3 | 1 | 2 | 205.5 |
| 49 | 2 | 1 | 4 | 1 | 123.0 | 220 | 4 | 1 | 3 | 3 | 183.0 | 391 | 6 | 2 | 3 | 1 | 205.5 |
| 50 | 2 | 1 | 1 | 4 | 123.0 | 221 | 3 | 4 | 3 | 1 | 183.0 | 392 | 6 | 2 | 1 | 3 | 205.5 |
| 51 | 1 | 4 | 2 | 1 | 123.0 | 222 | 3 | 4 | 1 | 3 | 183.0 | 393 | 6 | 1 | 3 | 2 | 205.5 |
| 52 | 1 | 4 | 1 | 2 | 123.0 | 223 | 3 | 3 | 4 | 1 | 183.0 | 394 | 6 | 1 | 2 | 3 | 205.5 |
| 53 | 1 | 2 | 4 | 1 | 123.0 | 224 | 3 | 3 | 1 | 4 | 183.0 | 395 | 5 | 3 | 2 | 2 | 205.5 |
| 54 | 1 | 2 | 1 | 4 | 123.0 | 225 | 3 | 1 | 4 | 3 | 183.0 | 396 | 5 | 2 | 3 | 2 | 205.5 |
| 55 | 1 | 1 | 4 | 2 | 123.0 | 226 | 3 | 1 | 3 | 4 | 183.0 | 397 | 5 | 2 | 2 | 3 | 205.5 |
| 56 | 1 | 1 | 2 | 4 | 123.0 | 227 | 1 | 4 | 3 | 3 | 183.0 | 398 | 3 | 6 | 2 | 1 | 205.5 |
| 57 | 3 | 2 | 2 | 1 | 125.0 | 228 | 1 | 3 | 4 | 3 | 183.0 | 399 | 3 | 6 | 1 | 2 | 205.5 |
| 58 | 3 | 2 | 1 | 2 | 125.0 | 229 | 1 | 3 | 3 | 4 | 183.0 | 400 | 3 | 5 | 2 | 2 | 205.5 |
| 59 | 3 | 1 | 2 | 2 | 125.0 | 230 | 6 | 3 | 1 | 1 | 183.5 | 401 | 3 | 2 | 6 | 1 | 205.5 |
| 60 | 2 | 3 | 2 | 1 | 125.0 | 231 | 6 | 1 | 3 | 1 | 183.5 | 402 | 3 | 2 | 5 | 2 | 205.5 |
| 61 | 2 | 3 | 1 | 2 | 125.0 | 232 | 6 | 1 | 1 | 3 | 183.5 | 403 | 3 | 2 | 2 | 5 | 205.5 |
| 62 | 2 | 2 | 3 | 1 | 125.0 | 233 | 5 | 3 | 2 | 1 | 183.5 | 404 | 3 | 2 | 1 | 6 | 205.5 |
| 63 | 2 | 2 | 1 | 3 | 125.0 | 234 | 5 | 3 | 1 | 2 | 183.5 | 405 | 3 | 1 | 6 | 2 | 205.5 |
| 64 | 2 | 1 | 3 | 2 | 125.0 | 235 | 5 | 2 | 3 | 1 | 183.5 | 406 | 3 | 1 | 2 | 6 | 205.5 |
| 65 | 2 | 1 | 2 | 3 | 125.0 | 236 | 5 | 2 | 1 | 3 | 183.5 | 407 | 2 | 6 | 3 | 1 | 205.5 |
| 66 | 1 | 3 | 2 | 2 | 125.0 | 237 | 5 | 1 | 3 | 2 | 183.5 | 408 | 2 | 6 | 1 | 3 | 205.5 |
| 67 | 1 | 2 | 3 | 2 | 125.0 | 238 | 5 | 1 | 2 | 3 | 183.5 | 409 | 2 | 5 | 3 | 2 | 205.5 |
| 68 | 1 | 2 | 2 | 3 | 125.0 | 239 | 3 | 6 | 1 | 1 | 183.5 | 410 | 2 | 5 | 2 | 3 | 205.5 |
| 69 | 2 | 2 | 2 | 2 | 128.0 | 240 | 3 | 5 | 2 | 1 | 183.5 | 411 | 2 | 3 | 6 | 1 | 205.5 |
| 70 | 4 | 3 | 1 | 1 | 142.0 | 241 | 3 | 5 | 1 | 2 | 183.5 | 412 | 2 | 3 | 5 | 2 | 205.5 |
| 71 | 4 | 1 | 3 | 1 | 142.0 | 242 | 3 | 2 | 5 | 1 | 183.5 | 413 | 2 | 3 | 2 | 5 | 205.5 |
| 72 | 4 | 1 | 1 | 3 | 142.0 | 243 | 3 | 2 | 1 | 5 | 183.5 | 414 | 2 | 3 | 1 | 6 | 205.5 |
| 73 | 3 | 4 | 1 | 1 | 142.0 | 244 | 3 | 1 | 6 | 1 | 183.5 | 415 | 2 | 2 | 5 | 3 | 205.5 |
| 74 | 3 | 1 | 4 | 1 | 142.0 | 245 | 3 | 1 | 5 | 2 | 183.5 | 416 | 2 | 2 | 3 | 5 | 205.5 |
| 75 | 3 | 1 | 1 | 4 | 142.0 | 246 | 3 | 1 | 2 | 5 | 183.5 | 417 | 2 | 1 | 6 | 3 | 205.5 |
| 76 | 1 | 4 | 3 | 1 | 142.0 | 247 | 3 | 1 | 1 | 6 | 183.5 | 418 | 2 | 1 | 3 | 6 | 205.5 |
| 77 | 1 | 4 | 1 | 3 | 142.0 | 248 | 2 | 5 | 3 | 1 | 183.5 | 419 | 1 | 6 | 3 | 2 | 205.5 |
| 78 | 1 | 3 | 4 | 1 | 142.0 | 249 | 2 | 5 | 1 | 3 | 183.5 | 420 | 1 | 6 | 2 | 3 | 205.5 |
| 79 | 1 | 3 | 1 | 4 | 142.0 | 250 | 2 | 3 | 5 | 1 | 183.5 | 421 | 1 | 3 | 6 | 2 | 205.5 |
| 80 | 1 | 1 | 4 | 3 | 142.0 | 251 | 2 | 3 | 1 | 5 | 183.5 | 422 | 1 | 3 | 2 | 6 | 205.5 |
| 81 | 1 | 1 | 3 | 4 | 142.0 | 252 | 2 | 1 | 5 | 3 | 183.5 | 423 | 1 | 2 | 6 | 3 | 205.5 |
| 82 | 6 | 1 | 1 | 1 | 142.5 | 253 | 2 | 1 | 3 | 5 | 183.5 | 424 | 1 | 2 | 3 | 6 | 205.5 |
| 83 | 5 | 2 | 1 | 1 | 142.5 | 254 | 1 | 6 | 3 | 1 | 183.5 | 425 | 4 | 4 | 2 | 2 | 206.0 |
| 84 | 5 | 1 | 2 | 1 | 142.5 | 255 | 1 | 6 | 1 | 3 | 183.5 | 426 | 4 | 2 | 4 | 2 | 206.0 |
| 85 | 5 | 1 | 1 | 2 | 142.5 | 256 | 1 | 5 | 3 | 2 | 183.5 | 427 | 4 | 2 | 2 | 4 | 206.0 |
| 86 | 2 | 5 | 1 | 1 | 142.5 | 257 | 1 | 5 | 2 | 3 | 183.5 | 428 | 2 | 4 | 4 | 2 | 206.0 |
| 87 | 2 | 1 | 5 | 1 | 142.5 | 258 | 1 | 3 | 6 | 1 | 183.5 | 429 | 2 | 4 | 2 | 4 | 206.0 |
| 88 | 2 | 1 | 1 | 5 | 142.5 | 259 | 1 | 3 | 5 | 2 | 183.5 | 430 | 2 | 2 | 4 | 4 | 206.0 |
| 89 | 1 | 6 | 1 | 1 | 142.0 | 260 | 1 | 3 | 2 | 5 | 183.5 | 431 | 6 | 2 | 2 | 2 | 208.5 |
| 90 | 1 | 5 | 2 | 1 | 142.5 | 261 | 1 | 3 | 1 | 6 | 183.5 | 432 | 2 | 6 | 2 | 2 | 208.5 |
| 91 | 1 | 5 | 1 | 2 | 142.5 | 252 | 1 | 2 | 5 | 3 | 183.5 | 433 | 2 | 2 | 6 | 2 | 208.5 |
| 92 | 1 | 2 | 5 | 1 | 142.5 | 263 | 1 | 2 | 3 | 5 | 183.5 | 434 | 2 | 2 | 2 | 6 | 208.5 |
| 93 | 1 | 2 | 1 | 5 | 142.5 | 264 | 1 | 1 | 6 | 3 | 183.5 | 435 | 5 | 4 | 3 | 1 | 222.5 |
| 94 | 1 | 1 | 6 | 1 | 142.5 | 265 | 1 | 1 | 3 | 6 | 183.5 | 436 | 5 | 4 | 1 | 3 | 222.5 |
| 95 | 1 | 1 | 5 | 2 | 142.5 | 266 | 4 | 4 | 2 | 1 | 184.0 | 437 | 5 | 3 | 4 | 1 | 222.5 |
| 96 | 1 | 1 | 2 | 5 | 142.5 | 267 | 4 | 4 | 1 | 2 | 184.0 | 438 | 5 | 3 | 1 | 4 | 222.5 |
| 97 | 1 | 1 | 1 | 6 | 142.5 | 268 | 4 | 2 | 4 | 1 | 184.0 | 439 | 5 | 1 | 4 | 3 | 222.5 |
| 98 | 3 | 3 | 2 | 1 | 144.0 | 269 | 4 | 2 | 1 | 4 | 184.0 | 440 | 5 | 1 | 3 | 4 | 222.5 |
| 99 | 3 | 3 | 1 | 2 | 144.0 | 270 | 4 | 1 | 4 | 2 | 184.0 | 441 | 4 | 5 | 3 | 1 | 222.5 |
| 100 | 3 | 2 | 3 | 1 | 144.0 | 271 | 4 | 1 | 2 | 4 | 184.0 | 442 | 4 | 5 | 1 | 3 | 222.5 |
| 101 | 3 | 2 | 1 | 3 | 144.0 | 272 | 2 | 4 | 1 | 1 | 184.0 | 443 | 4 | 3 | 5 | 1 | 222.5 |
| 102 | 3 | 1 | 3 | 2 | 144.0 | 273 | 2 | 4 | 1 | 4 | 184.0 | 444 | 4 | 3 | 1 | 5 | 222.5 |
| 103 | 3 | 1 | 2 | 3 | 144.0 | 274 | 2 | 1 | 4 | 4 | 184.0 | 445 | 4 | 1 | 5 | 3 | 222.5 |
| 104 | 2 | 3 | 3 | 1 | 144.0 | 275 | 1 | 4 | 4 | 2 | 184.0 | 446 | 4 | 1 | 3 | 5 | 222.5 |
| 105 | 2 | 3 | 1 | 3 | 144.0 | 276 | 1 | 4 | 2 | 4 | 184.0 | 447 | 3 | 5 | 4 | 1 | 222.5 |
| 106 | 2 | 1 | 3 | 3 | 144.0 | 277 | 1 | 2 | 4 | 4 | 184.0 | 448 | 3 | 5 | 1 | 4 | 222.5 |
| 107 | 1 | 3 | 3 | 2 | 144.0 | 278 | 3 | 3 | 3 | 2 | 185.0 | 449 | 3 | 4 | 5 | 1 | 222.5 |
| 108 | 1 | 3 | 2 | 3 | 144.0 | 279 | 3 | 3 | 2 | 3 | 185.0 | 450 | 3 | 4 | 1 | 5 | 222.5 |
| 109 | 1 | 2 | 3 | 3 | 144.0 | 280 | 3 | 2 | 3 | 3 | 185.0 | 451 | 3 | 1 | 5 | 4 | 222.5 |
| 110 | 4 | 2 | 2 | 1 | 145.0 | 281 | 2 | 3 | 3 | 3 | 185.0 | 452 | 3 | 1 | 4 | 5 | 222.5 |
| 111 | 4 | 2 | 1 | 2 | 145.0 | 282 | 4 | 3 | 2 | 2 | 186.0 | 453 | 1 | 5 | 4 | 3 | 222.5 |
| 112 | 4 | 1 | 2 | 2 | 145.0 | 283 | 4 | 2 | 3 | 2 | 186.0 | 454 | 1 | 5 | 3 | 4 | 222.5 |
| 113 | 2 | 4 | 2 | 1 | 145.0 | 284 | 4 | 2 | 2 | 3 | 186.0 | 455 | 1 | 4 | 5 | 3 | 222.5 |
| 114 | 2 | 4 | 1 | 2 | 145.0 | 285 | 3 | 4 | 2 | 2 | 186.0 | 456 | 1 | 4 | 3 | 5 | 222.5 |
| 115 | 2 | 2 | 4 | 1 | 145.0 | 286 | 3 | 2 | 4 | 2 | 186.0 | 457 | 1 | 3 | 5 | 4 | 222.5 |
| 116 | 2 | 2 | 1 | 4 | 145.0 | 287 | 3 | 2 | 2 | 4 | 186.0 | 458 | 1 | 3 | 4 | 5 | 222.5 |
| 117 | 2 | 1 | 4 | 2 | 145.0 | 288 | 2 | 4 | 3 | 2 | 186.0 | 459 | 6 | 5 | 1 | 1 | 223.0 |
| 118 | 2 | 1 | 2 | 4 | 145.0 | 289 | 2 | 4 | 2 | 3 | 186.0 | 460 | 6 | 1 | 5 | 1 | 223.0 |
| 119 | 1 | 4 | 2 | 2 | 145.0 | 290 | 2 | 3 | 4 | 2 | 186.0 | 461 | 6 | 1 | 1 | 5 | 223.0 |
| 120 | 1 | 2 | 4 | 2 | 145.0 | 291 | 2 | 3 | 2 | 4 | 186.0 | 462 | 5 | 6 | 1 | 1 | 223.0 |
| 121 | 1 | 2 | 2 | 4 | 145.0 | 292 | 2 | 2 | 4 | 3 | 186.0 | 463 | 5 | 5 | 2 | 1 | 223.0 |
| 122 | 3 | 2 | 2 | 2 | 147.0 | 293 | 2 | 2 | 3 | 4 | 186.0 | 464 | 5 | 5 | 1 | 2 | 223.0 |
| 123 | 2 | 3 | 2 | 2 | 147.0 | 294 | 6 | 2 | 2 | 1 | 186.5 | 465 | 5 | 2 | 5 | 1 | 223.0 |
| 124 | 2 | 2 | 3 | 2 | 147.0 | 295 | 6 | 2 | 1 | 2 | 186.5 | 466 | 5 | 2 | 1 | 5 | 223.0 |
| 125 | 2 | 2 | 2 | 3 | 147.0 | 296 | 6 | 1 | 2 | 2 | 186.5 | 467 | 5 | 1 | 6 | 1 | 223.0 |
| 126 | 5 | 3 | 1 | 1 | 161.5 | 297 | 5 | 2 | 2 | 2 | 186.5 | 468 | 5 | 1 | 5 | 2 | 223.0 |
| 127 | 5 | 1 | 3 | 1 | 161.5 | 298 | 2 | 6 | 2 | 1 | 186.5 | 469 | 5 | 1 | 2 | 5 | 223.0 |
| 128 | 5 | 1 | 1 | 3 | 161.5 | 299 | 2 | 6 | 1 | 2 | 186.5 | 470 | 5 | 1 | 1 | 6 | 223.0 |
| 129 | 3 | 5 | 1 | 1 | 161.5 | 300 | 2 | 5 | 2 | 2 | 186.5 | 471 | 4 | 4 | 4 | 1 | 223.0 |
| 130 | 3 | 1 | 5 | 1 | 161.5 | 301 | 2 | 2 | 6 | 1 | 186.5 | 472 | 4 | 4 | 1 | 4 | 223.0 |
| 131 | 3 | 1 | 1 | 5 | 161.5 | 302 | 2 | 2 | 5 | 2 | 186.5 | 473 | 4 | 1 | 4 | 4 | 223.0 |
| 132 | 1 | 5 | 3 | 1 | 161.5 | 303 | 2 | 2 | 2 | 5 | 186.5 | 474 | 2 | 5 | 5 | 1 | 223.0 |
| 133 | 1 | 5 | 1 | 3 | 161.5 | 304 | 2 | 2 | 1 | 6 | 186.5 | 475 | 2 | 5 | 1 | 5 | 223.0 |
| 134 | 1 | 3 | 5 | 1 | 161.5 | 305 | 2 | 1 | 6 | 2 | 186.5 | 476 | 2 | 1 | 5 | 5 | 223.0 |
| 135 | 1 | 3 | 1 | 5 | 161.5 | 306 | 2 | 1 | 2 | 6 | 186.5 | 477 | 1 | 6 | 5 | 1 | 223.0 |
| 136 | 1 | 1 | 5 | 3 | 161.5 | 307 | 1 | 6 | 2 | 2 | 186.5 | 478 | 1 | 6 | 1 | 5 | 223.0 |
| 137 | 1 | 1 | 3 | 5 | 161.5 | 308 | 1 | 2 | 6 | 2 | 186.5 | 479 | 1 | 5 | 6 | 1 | 223.0 |
| 138 | 4 | 4 | 1 | 1 | 162.0 | 309 | 1 | 2 | 2 | 6 | 186.5 | 480 | 1 | 5 | 5 | 2 | 223.0 |
| 139 | 4 | 1 | 4 | 1 | 162.0 | 310 | 5 | 5 | 1 | 1 | 201.0 | 481 | 1 | 5 | 2 | 5 | 223.0 |
| 140 | 4 | 1 | 1 | 4 | 162.0 | 311 | 5 | 1 | 5 | 1 | 201.0 | 482 | 1 | 5 | 1 | 6 | 223.0 |
| 141 | 1 | 4 | 4 | 1 | 162.0 | 312 | 5 | 1 | 1 | 5 | 201.0 | 483 | 1 | 4 | 4 | 4 | 223.0 |
| 142 | 1 | 4 | 1 | 4 | 162.0 | 313 | 1 | 5 | 5 | 1 | 201.0 | 484 | 1 | 2 | 5 | 5 | 223.0 |
| 143 | 1 | 1 | 4 | 4 | 162.0 | 314 | 1 | 5 | 1 | 5 | 201.0 | 485 | 1 | 1 | 6 | 5 | 223.0 |
| 144 | 3 | 3 | 3 | 1 | 163.0 | 315 | 1 | 1 | 5 | 5 | 201.0 | 486 | 1 | 1 | 5 | 6 | 223.0 |
| 145 | 3 | 3 | 1 | 3 | 163.0 | 316 | 5 | 3 | 3 | 1 | 202.5 | 487 | 4 | 3 | 3 | 3 | 224.0 |
| 146 | 3 | 1 | 3 | 3 | 163.0 | 317 | 5 | 3 | 1 | 3 | 202.5 | 488 | 3 | 4 | 3 | 3 | 224.0 |
| 147 | 1 | 3 | 3 | 3 | 163.0 | 318 | 5 | 1 | 3 | 3 | 202.5 | 489 | 3 | 3 | 4 | 3 | 224.0 |
| 148 | 4 | 3 | 2 | 1 | 164.0 | 319 | 3 | 5 | 3 | 1 | 202.5 | 490 | 3 | 3 | 3 | 4 | 224.0 |
| 149 | 4 | 3 | 1 | 2 | 164.0 | 320 | 3 | 5 | 1 | 3 | 202.5 | 491 | 5 | 3 | 3 | 2 | 224.5 |
| 150 | 4 | 2 | 3 | 1 | 164.0 | 321 | 3 | 3 | 5 | 1 | 202.5 | 492 | 5 | 3 | 2 | 3 | 224.5 |
| 151 | 4 | 2 | 1 | 3 | 164.0 | 322 | 3 | 3 | 1 | 5 | 202.5 | 493 | 5 | 2 | 3 | 3 | 224.5 |
| 152 | 4 | 1 | 3 | 2 | 164.0 | 323 | 3 | 1 | 5 | 3 | 202.5 | 494 | 3 | 6 | 3 | 1 | 224.5 |
| 153 | 4 | 1 | 2 | 3 | 164.0 | 324 | 3 | 1 | 3 | 5 | 202.5 | 495 | 3 | 6 | 1 | 3 | 224.5 |
| 154 | 3 | 4 | 2 | 1 | 164.0 | 325 | 1 | 5 | 3 | 3 | 202.5 | 496 | 3 | 5 | 3 | 2 | 224.5 |
| 155 | 3 | 4 | 1 | 2 | 164.0 | 326 | 1 | 3 | 5 | 3 | 202.5 | 497 | 3 | 5 | 2 | 3 | 224.5 |
| 156 | 3 | 2 | 4 | 1 | 164.0 | 327 | 1 | 3 | 3 | 5 | 202.5 | 498 | 3 | 3 | 6 | 1 | 224.5 |
| 157 | 3 | 2 | 1 | 4 | 164.0 | 328 | 4 | 4 | 3 | 1 | 203.0 | 499 | 3 | 3 | 5 | 2 | 224.5 |
| 158 | 3 | 1 | 4 | 2 | 164.0 | 329 | 4 | 4 | 1 | 3 | 203.0 | 500 | 3 | 3 | 2 | 5 | 224.5 |
| 159 | 3 | 1 | 2 | 4 | 164.0 | 330 | 4 | 3 | 4 | 1 | 203.0 | 501 | 3 | 3 | 1 | 6 | 224.5 |
| 160 | 2 | 4 | 3 | 1 | 164.0 | 331 | 4 | 3 | 1 | 4 | 203.0 | 502 | 3 | 2 | 5 | 2 | 224.5 |
| 161 | 2 | 4 | 1 | 3 | 164.0 | 332 | 4 | 1 | 4 | 3 | 203.0 | 503 | 3 | 2 | 3 | 5 | 224.5 |
| 162 | 2 | 3 | 4 | 1 | 164.0 | 333 | 4 | 1 | 3 | 4 | 203.0 | 504 | 3 | 1 | 6 | 3 | 224.5 |
| 163 | 2 | 3 | 1 | 4 | 164.0 | 334 | 3 | 4 | 4 | 1 | 203.0 | 505 | 3 | 1 | 3 | 6 | 224.5 |
| 164 | 2 | 1 | 4 | 3 | 164.0 | 335 | 3 | 4 | 1 | 4 | 203.0 | 506 | 2 | 5 | 3 | 3 | 224.5 |
| 165 | 2 | 1 | 3 | 4 | 164.0 | 336 | 3 | 1 | 4 | 4 | 203.0 | 507 | 2 | 3 | 5 | 3 | 224.5 |
| 166 | 1 | 4 | 3 | 2 | 164.0 | 337 | 1 | 4 | 4 | 3 | 203.0 | 508 | 2 | 3 | 3 | 5 | 224.5 |
| 167 | 1 | 4 | 2 | 3 | 164.0 | 338 | 1 | 4 | 3 | 4 | 203.0 | 509 | 1 | 6 | 3 | 3 | 224.5 |
| 168 | 1 | 3 | 4 | 2 | 164.0 | 339 | 1 | 3 | 4 | 4 | 203.0 | 510 | 1 | 3 | 6 | 3 | 224.5 |
| 169 | 1 | 3 | 2 | 4 | 164.0 | 340 | 6 | 4 | 1 | 1 | 203.5 | 511 | 1 | 3 | 3 | 6 | 224.5 |
| 170 | 1 | 2 | 4 | 3 | 164.0 | 341 | 6 | 1 | 4 | 1 | 203.5 | | | | | | |

The union of these five hundred twelve lowest energy 8D groupings comprises the preferred 8D constellation of the instant invention.

It should be appreciated that the mapping technique of the second preferred embodiment described herein can be extended. Instead of dividing each one hundred ninety-two point 2D constellation into six rings of thirty-two points, the 2D constellations can each be divided into twelve distinct energy rings of sixteen points each (or twenty-four rings of eight points each, etc.), with each ring of sixteen points being further divided into its four constituent rotational subgroups of four points each. With such an arrangement, the eight thousand one hundred ninety-six (2¹³) lowest energy groupings would be chosen from the twenty thousand seven hundred and thirty-six (12⁴) possible groupings to comprise the constellation. An 8D point would be chosen from the defined constellation by using thirteen bits to choose the grouping, eight bits to define the rotational subgroups, and the remaining eight bits (two per 2D constellation) to define the point.

There has been described and illustrated herein techniques for mapping all points of an eight dimensional constellation of a convolutionally coded 19.2 Kbit/sec modem. While particular embodiments have been described, it is not intended that the invention be limited thereto, as it is intended that the invention be broad in scope as the art will allow. Thus, while the mapping technique was described with reference to a particular 19.2 Kbit/second modem which utilizes a differential encoder and a sixty-four state convolutional encoder, it will be recognized that the mapping technique has application to modems having different arrangements. Also, while the mapping technique was described with reference to an 8D constellation comprised of four 160 or 192 point constellations, it will be appreciated that mapping technique equally applies to constellations of four or more dimensions (i.e. 4+2y dimensions where y is a non-negative integer) having particular numbers of points, provided that: a) the 2D constellation can be divided into an integer number (n) of groups having the same number of points, where the number of points is 2^{r}, where r>2 and n>2; and b) the number of resulting groupings is greater than 2^{z-2r-ry} where z is the number of bits available for defining the points of the 4+2y dimensional constellation, and where z-2r-ry is the number of bits allocated to choosing a grouping. For example, an 8D constellation (y=2) comprised of a subset of points from four 2D constellations having one hundred forty-four points each could be divided into nine rings (n=9) of sixteen points (r=4) each. In such a situation, six thousand five hundred sixty-one (9⁴) groupings would be available. If twenty-eight bits were available for picking a point (z=28), twelve bits (12 = 28-8-8) would be assigned to picking one of the four thousand ninety-six lowest energy groupings, eight bits would be assigned to picking the proper subgroup rotations, and eight bits would be assigned to picking the particular point. Similarly, if a 10D constellation (y=3) comprised of a subset of points from five 2D constellations having one hundred twelve points each could be divided into seven rings (n=7) of sixteen points each (r=4). If thirty-five bits were available for picking a point (z=35), fifteen bits (15 = 35-8-12) would be assigned to picking sixteen thousand three hundred eight-four of the sixteen thousand eight hundred and seven (7⁵) 10D groupings, ten bits would be assigned to picking the proper subgroup rotations, and ten bits would be assigned to picking the particular point.

In particular, the mapping technique has advantageous application to constellations of sixteen dimensions, which is effectively comprised as a concatenation of two of the eight dimensional constellations described. With such a constellation, two blocks of twenty-nine bits generated substantially as set forth with reference to Fig. 1 could be used together. Effectively, sixteen bits would now be used to choose rotations (two per 2D constellation as before), twenty-four bits to choose points (three per 2D constellation as before), and eighteen bits would be used to choose ring combinations. Thus, a choice of the 262,144 lowest energy 16D groupings out of the possible 6⁸ groups would be made; the union of the points in those grouping constituting the preferred constellation.

## Claims

1. A mapping method for defining with z bits all p=2^{z} points of a constellation having 4+2y dimensions where y is a non-negative integer, the constellation comprising a desired subset of the concatenation of 2+y 2D constellations, each 2D constellation comprising n(2^{r}) points, where n is an integer greater than two, r is an integer greater than two, and z is an integer, the mapping technique being characterised by:
a) dividing each 2D constellation into n groups of 2^{r} points each, the n groups being chosen such that each is of substantially different average energy relative to the others, the concatenation of one of the n groups from each 2D constellation comprising a (4+2y)D grouping;
b) choosing 2^{z-2r-ry} (4+2y)D groupings of the possible n^{(2+y)} (4+2y)D groupings, the union of said 2^{z-2r-ry} (4+2y)D groupings constituting said constellation;
c) for each 2D constellation, partitioning each group of 2^{r} points into four subgroups of 2^{r-2} points, three of the subgroups representing ninety, one hundred eighty, and two hundred seventy degree rotations of the first subgroup;
d) choosing a (4+2y)D point in said constellation by,
1) utilizing z-2r-ry bits of said z bits to identify in which of said 2^{z-2r-ry} (4+2y)D groupings said (4+2y)D point lies;
2) utilizing 2(2+y) additional bits of said z bits, two for each 2D constellation, to identify in which subgroups of the identified (4+2y)D grouping said (4+2y)D point lies;
3) utilizing (r-2) (2+y) of said z bits, r-2 bits for each 2D constellation, to identify among the points of said identified (4+2y)D subgroups the (4+2y)D point being sent.

2. The mapping method of claim 1, wherein said chosen 2^{z-2r-ry} groupings are the 2^{z-2r-ry} substantially lowest energy (4+2y)D groupings of said n^{(2+y)} (4+2y)D groupings.

3. The mapping method of claim 1 or 2, wherein said n groups of substantially different energy are chosen for each 2D constellation by choosing for each 2D constellation a first set of 2^{r}/4 points of lowest energy which are not ninety, one hundred eighty, or two hundred seventy degree rotations of each other and using those 2^{r}/4 points and their ninety, one hundred eighty, and two hundred seventy degree rotations as a first group, and then choosing from the remaining points a next set of 2^{r}/4 points of lowest energy which are not ninety, one hundred eighty, or two hundred seventy degree rotations of each other and using those 2^{r}/4 points and their ninety, one hundred eighty, and two hundred seventy degree rotations as a next group, and repeating the choosing from remaining points step until all n groups are chosen.

4. The mapping method of claim 1 or 2, wherein said n groups of substantially different energy are chosen for each 2D constellation by dividing each 2D constellation geometrically so as to locate each group of points in n areas approximating n concentric rings around an origin.

5. The mapping method of any of claims 1 to 4, wherein z=29, y=2, n=5 and r=5.

6. The mapping method of any of claims 1 to 4, wherein z=29, y=2, n=6 and r=5.

7. An apparatus for transmitting a stream of s information bits by sending corresponding signals over a channel (40) in 4+2y signalling slots, where y is a non-negative integer and s is a positive integer equal to at least thirteen, said apparatus including encoding means (16,18) for encoding at least some of the s information bits that appear during a block of said 4+2y signalling slots by adding at least one redundant bit, to form a set of z signal point selection bits for said block, where z is an integer greater than s, selecting means (30) for selecting, for said set of z signal point selection bits, a 4+2y dimensional signal point drawn from a 4+2y dimensional constellation for said block, said 4+2y dimensional signal point selected for a particular said block being dependent on the 4+2y dimensional signal point selected for at least one other said block, said selecting means (30) being connected to be responsive to said encoding means (16,18) and including a mapping means for establishing a correspondence between each possible combination of said z signal point selection bits and the coordinates of the 4+2y dimensional signal points in said 4+2y dimensional constellation, and modulating means (36,38) for modulating at least one carrier for transmission over said channel (40) in accordance with the coordinates represented by each selected said 4+2y dimensional signal point, said modulating means (36,38) being connected to be responsive to said encoding means (16,18), **characterized in that**
said encoding means (16,18) and said selecting means (30) define a dividing of said 4+2y dimensional constellation into 2^{z-2r-ry} 4+2y dimensional groupings out of a possible n^{2+y} 4+2y dimensional groupings, n being an integer greater than two and r being an integer greater than two, each 4+2y dimensional grouping being a concatenation of 2+y 2D groups, one from each of 2+y 2D constellations, such that said 4+2y dimensional constellation is a subset of a concatenation of said 2+y 2D constellations,
wherein each 2D group comprises 2^{r} 2D points of its respective 2D constellation, and each said 2D constellation is divided into n 2D groups, each 2D group having a substantially different average energy relative to the others, and
wherein said encoding means (16,18) and said selecting means (30) further define a dividing of each of said 2^{z-2r-ry} 4+2y dimensional groupings into four subgroups, three of the subgroups representing ninety, one hundred eighty, and two hundred seventy degree rotations of the first subgroup.

8. An apparatus according to claim 7, wherein said 2^{z-2r-ry} 4+2y dimensional groupings are the 2^{z-2r-ry} substantially lowest energy 4+2y dimensional groupings available.

9. An apparatus according to claim 7 or 8, wherein S=28, and z=29.

10. An apparatus according to claims 7, 8 or 9, wherein y=2, r=5, and n=5.

11. An apparatus according to claim 9, wherein y = 0.

12. A mapping method utilizing 29(x) bits, x being an integer greater than one, for defining all points of an 8(x) dimensional constellation, the 8(x) dimensional constellation comprising a desired subset of the concatenation of 4(x) two dimensional constellations, each two dimensional constellation comprising 32(y) points, where y is an integer greater than five, the mapping technique being characterised by:
a) dividing each two dimensional constellation into y groups of thirty-two points each, the y groups being chosen such that each is of substantially different average energy relative to the others, the concatenation of one of the y groups from each two dimensional constellation comprising an 8(x) dimensional grouping;
b) choosing from the possible y^{4(x)} 8(x) dimensional groupings, 512^{(x)} 8(x) dimensional groupings, said y^{4(x)} 8(x) dimensional groupings constituting said 8(x) dimensional constellation;
c) for each two dimensional constellation partitioning each group of thirty-two points into four subgroups of eight points, three of the subgroups representing ninety, one hundred eighty, and two hundred seventy degree rotations of the first subgroup; and
d) choosing an 8(x)-dimensional point in said 8(x) dimensional constellation by,
1) utilizing 9(x) bits of said 29(x) bits to identify in which of said 512^{(x)} 8(x)-dimensional groupings said 8(x) dimensional point lies;
2) utilizing 8(x) additional bits of said 29(x) bits, two for each two-dimensional constellation, to identify in which subgroups of the identified 8(x)-dimensional grouping said 8(x)-dimensional point lies; and
3) utilizing the remaining 12(x) bits of said 29(x) bits, three for each two-dimensional constellation, to identify among the points of said identified sub-groups said 8(x)-dimensional point.

13. A mapping method according to claim 12, wherein x=2.

14. A mapping method according to claim 12, wherein y=5 or 6.

## Patentansprüche

1. Abbildungsverfahren, um mit z Bits alle p=2^{z} Punkte einer Konstellation mit 4+2y Dimensionen zu definieren, wobei y eine nicht negative ganze Zahl ist, wobei die Konstellation eine gewünschte Untergruppe der Verkettung von 2+y 2D-Konstellationen umfaßt, wobei jede 2D-Konstellation n(2^{r}) Punkte umfaßt, worin n eine ganze Zahl größer als 2, r eine ganze Zahl größer als 2 und z eine ganze Zahl ist, wobei das Abbildungsverfahren gekennzeichnet ist durch:
a) Aufteilen jeder 2D-Konstellation in jeweils n Gruppen von 2^{r} Punkten, wobei die n Gruppen so gewählt werden, daß jede eine nennenswert unterschiedliche Durchschnittsenergie in bezug auf die andere hat, wobei die Verkettung einer der n Gruppen von jeder 2D-Konstellation in eine (4+2y)D Gruppierung umfaßt,
b) Wählen von 2^{z-2r-ry} (4+2y)D Gruppierungen der möglichen n^{(2+y)} (4+2y)D Gruppierungen, wobei die Vereinigung der 2^{z-2r-ry)} (4+2y)D Gruppierungen die Konstellation bildet;
c) Unterteilen für jede 2D-Konstellation jede Gruppe von 2^{r} Punkten in vier Untergruppen von 2^{r-2} Punkten, wobei drei der Untergruppen Neunzig-, eine Hundertachtzig- und zwei Hundertsiebzig-Grad-Drehungen der ersten Untergruppe darstellen;
d) Wählen eines (4+2y)D Punktes in der Konstellation durch
1) Verwenden von z-2r-ry Bits der z Bits, um zu identifizieren, in welcher der 2^{z-2r-ry} (4+2y)D Gruppierungen der (4+2y)D Punkt liegt;
2) Verwenden von 2(2+y) zusätzlichen Bits der z Bits, zwei für jede 2D-Konstellation, um zu identifizieren, in welchen Untergruppen der identifizierten (4+2y)D Gruppierung der (4+2y) D-Punkt liegt;
3) Verwenden von (r-2) (2+y) der z Bits, r-2 Bits für jede 2D-Konstellation, um unter den Punkten der identifizierten (4+2y)D Untergruppen den gesendeten (4+2y)D Punkt zu identifizieren.

2. Abbildungsverfahren nach Anspruch 1, bei dem die gewählten 2^{z-2r-ry} Gruppierungen die (4+2y)D Gruppierungen der n^{(2+y)} (4+2y) D-Gruppierungen mit der weitgehend niedrigsten Energie sind.

3. Abbildungsverfahren nach Anspruch 1 oder 2, bei dem die n Gruppen mit weitgehend unterschiedlicher Energie für jede 2D-Konstellation gewählt werden, indem für jede 2D-Konstellation eine erste Gruppe von 2^{r}/4 Punkten mit niedrigster Energie gewählt wird, die nicht Neunzig-, Einhundertachtzig- oder Zweihundertsiebzig-Grad-Drehungen voneinander sind, und Verwendung dieser 2^{r}/4 Punkte und ihrer Neunzig-, Einhundertachtzig- und Zweihundertsiebzig-Grad-Drehungen als eine erste Gruppe, und dann aus den verbleibenden Punkten eine nächste Gruppe von 2^{r}/4 Punkten mit niedrigster Energie wählen, die keine Neunzig-, Einhundertachtzig- oder Zweihundertsiebzig-Grad-Drehungen voneinander sind, und Verwenden dieser 2^{r}/4 Punkte und ihre Neunzig-, Einhundertachtzig- und Zweihundertsiebzig-Grad-Drehungen als eine nächste Gruppe, und Wiederholen der Schritte der Wahl von verbleibenden Punkten, bis alle n Gruppen gewählt sind.

4. Abbildungsverfahren nach Anspruch 1 oder 2, bei dem die n Gruppen mit weitgehend unterschiedlicher Energie für jede 2D-Konstellation gewählt werden, indem jede 2D-Konstellation geometrisch geteilt wird, um so jede Gruppe von Punkten in n Bereichen zu lokalisieren, die sich n konzentrischen Ringen um einen Ursprung annähern.

5. Abbildungsverfahren nach einem der Ansprüche 1 bis 4, bei dem z=29, y=2, n=5 und r=5 ist.

6. Abbildungsverfahren nach einem der Ansprüche 1 bis 4, bei dem z=29, y=2, n=6 und r=5 ist.

7. Vorrichtung zur Übertragung eines Stroms von s Informations-Bits, in dem entsprechende Signale über einen Kanal (40) in 4+2y Signalübertragungslücken gesendet werden, wobei y eine nicht negative gänze Zahl und s eine positive gänze Zahl ist, die wenigstens gleich dreizehn ist, wobei die Vorrichtung enthält: Kodierungsmittel (16, 18) zum Kodieren wenigstens einiger s Informations-Bits, die während eines Blocks der 4+2y Signalübertragungslücken erscheinen, indem wenigstens ein redundantes Bit hinzugefügt wird, um eine Gruppe von z Signalpunkt-Auswahl-Bits für den Block zu bilden, wobei z eine gänze Zahl größer als s ist; Auswahlmittel, um für die Gruppe von z Signalpunkt-Auswahl-Bits einen 4+2y-dimensionalen Signalpunkt auszuwählen, der von einer 4+2y-dimensionalen Konstellation für den Block gezogen wird, wobei der für einen bestimmten Block ausgewählte 4+2y-dimensionale Signalpunkt von dem für wenigstens einen anderen Block gewählten 4+2y-dimensionalen Signalpunkt abhängt, wobei die Auswahlmittel so angeschlossen sind, daß sie auf die Kodiermittel ansprechen und Abbildungsmittel enthalten, um eine Zuordnung zwischen jeder möglichen Kombination der z Signalpunkt-Auswahl-Bits und den Koordinaten der 4+2y-dimensionalen Signalpunkte in der 4+2y-dimensionalen Konstellation zu errichten; und Modulationsmittel, um wenigstens einen Träger für die übertragung über den Kanal gemäß den Koordinaten zu modulieren, die durch jeden ausgewählten 4+2y-dimensionalen Signalpunkt dargestellt werden, wobei die Modulationsmittel (36, 38) so angeschlossen sind, daß sie auf die Kodiermittel (16, 18) ansprechen, dadurch gekennzeichnet, daß die Kodiermittel (16, 18) und die Auswahlmittel (30) eine Teilung der 4+2y dimensionalen Konstellation in 2^{z-2r-ry} 4+2y dimensionale Gruppen aus einer möglichen n^{z+y} 4+2y dimensionalen Gruppierung definieren, wobei n eine ganze Zahl größer als zwei, r eine ganze Zahl größer als zwei ist; wobei jede 4+2y dimensionale Gruppierung eine Verkettung von 2+y 2D-Gruppen ist, eine von jeder der 2+y 2D-Konstellationen, so daß die 4+2y dimensionale Konstellation eine Untergruppe einer Verkettung der 2+y 2D-Konstellationen ist,
daß jede 2D-Gruppe 2^{r} 2D-Punkte ihrer entsprechenden 2D-Konstellation umfaßt und jede 2D-Konstellation in n 2D-Gruppen unterteilt wird, wobei jede 2D-Gruppe eine im wesentlichen unterschiedliche Durchschnittsenergie relativ zu den anderen hat, und
daß die Kodiermittel (16, 18) und die Auswahlmittel (30) ferner eine Unterteilung jeder der 2^{z-2r-ry} 4+2y dimensionalen Gruppierungen in vier Untergruppen definieren, wobei drei der Untergruppen Neunzig-, eine Einhundertachtzig- und zwei Einhundertsiebzig-Grad-Drehungen der ersten Untergruppe darstellen.

8. Vorrichtung nach Anspruch 7, dadurch gekennzeichnet, daß die 2^{z-2r-ry} 4+2y dimensionalen Gruppierungen die verfügbaren 2^{z-2r-ry} dimensionalen Gruppierungen mit der weitgehend niedrigsten Energie sind.

9. Vorrichtung nach Anspruch 7 oder 8, bei der S=28 und z=29 ist.

10. Vorrichtung nach Anspruch 7, 8 oder 9, bei der y=2, r=5 und n=5 ist.

11. Vorrichtung nach Anspruch 9, bei der y=0 ist.

12. Abbildungsverfahren mit Verwendung von 29(x) Bits, wobei x eine ganze Zahl größer als eins ist, um alle Punkte einer 8(x)-dimensionalen Konstellation zu definieren, wobei die 8(x)-dimensionale Konstellation eine gewünschte Untergruppe der Verkettung von 4(x) zweidimensionalen Konstellationen umfaßt, wobei jede zweidimensionale Konstellation 32(y) Punkte umfaßt, wobei y eine ganze Zahl größer als 5 ist, und wobei das Abbildungsverfahren gekennzeichnet ist durch
a) Unterteilen jeder zweidimensionalen Konstellation in y Gruppen von jeweils zweiunddreißig Punkten, wobei die y Gruppen so gewählt werden, daß jede eine im wesentlichen unterschiedliche Durchschnittsenergie relativ zu den anderen hat, wobei die Verkettung einer der y Gruppen von jeder zweidimensionalen Konstellation eine 8(x)-dimensionale Gruppierung umfaßt;
b) Wählen aus den möglichen y^{4(x)} 8(x)-dimensionalen Gruppierungen 512^{(x)} 8(x)-dimensionale Gruppierungen, die die 8(x)- dimensionale Konstellation bilden;
c) Unterteilen für jede zweidimensionale Konstellation jede Gruppe von zweiunddreißig Punkten in vier Untergruppen von acht Punkten, wobei drei der Untergruppen Neunzig-, Einhundertachtzig- und Zweihundertsiebzig-Grad-Drehungen der ersten Untergruppe darstellen; und
d) Wählen eines 8(x)-dimensionalen Punktes in der 8(x)-dimensionalen Konstellation durch
1) Verwenden von 9(x) Bits der 29(x) Bits, um zu identifizieren, in welcher der 512(x) 8(x)-dimensionalen Gruppierungen der 8(x)-dimensionale Punkt liegt;
2) Verwenden von 8(x) zusätzlichen Bits der 29(x) Bits, zwei für jede zweidimensionale Konstellation, um zu identifizieren, in welchen Untergruppen der identifizierte 8(x)-dimensionalen Gruppierung der 8(x)-dimensionale Punkt liegt; und
3) Verwendung der restlichen 12(x) Bits der 29(x) Bits, drei für jede zweidimensionale Konstellation, um unter den Punkten der identifizierten Untergruppen den 8(x)-dimensionalen Punkt zu identifizieren.

13. Abbildungsverfahren nach Anspruch 12, bei dem x=2 ist.

14. Abbildungsverfahren nach Anspruch 12, bei dem y=5 oder 6 ist.

## Revendications

1. Procédé de topographie pour définir sur z bits l'ensemble des p=2^{z} points d'une constellation ayant 4+2y dimensions, où y est un entier non négatif, la constellation comprenant un sous-ensemble désiré de la concaténation de 2+y constellations en 2D, chaque constellation en 2D comprenant n(2^{r}) points, où n est un entier supérieur à deux, r est un entier supérieur à deux et z est un entier, le procédé de topographie étant caractérisé par les étapes de :
a) division de chaque constellation en 2D en n groupes de 2^{r} points chacun, les n groupes étant choisis de telle façon que chacun soit d'une énergie moyenne sensiblement différente par rapport aux autres, la concaténation de l'un des n groupes de chaque constellation en 2D comprenant un groupement en (4+2y)D ;
b) choix de 2^{z-2r-ry} groupements en (4+2y)D des n^{(2+y)} groupements en (4+2y)D possibles, la réunion desdits 2^{z-2r-ry} groupements en (4+2y)D constituant ladite constellation ;
c) pour chaque constellation en 2D, partitionnement de chaque groupe de 2^{r} points en quatre sous-groupes de 2^{r-2} points, trois des sous-groupes représentant des rotations à quatre-vingt-dix, cent quatre-vingts et deux cent soixante-dix degrés du premier sous-groupe ;
d) choix d'un point en (4+2y)D dans ladite constellation :
1) en utilisant z-2r-ry bits desdits z bits pour identifier dans lequel desdits 2^{z-2r-ry} groupements en (4+2y)D se trouve ledit point en (4+2y)D ;
2) en utilisant 2(2+y) bits supplémentaires desdits z bits, deux pour chaque constellation en 2D, pour identifier dans quels sous-groupes du groupement en (4+2y)D identifié se trouve ledit point en(4+2y)D ;
3) en utilisant (r-2)(2+y) desdits z bits, r-2 bits pour chaque constellation en 2D, pour identifier parmi les points desdits sous-groupes en (4+2y)D identifiés le point en (4+2y)D envoyé.

2. Procédé de topographie selon la revendication 1, dans lequel lesdits 2^{z-2r-ry} groupements choisis sont les 2^{z-2r-ry} groupements en (4+2y)D d'énergie sensiblement la plus faible desdits n(2+y) groupements en (4+2y)D.

3. Procédé de topographie selon la revendication 1 ou 2, dans lequel lesdits n groupes d'énergie sensiblement différente sont choisis pour chaque constellation en 2D en choisissant pour chaque constellation en 2D un premier ensemble de 2^{r}/4 points d'énergie la plus faible qui ne sont pas des rotations à quatre-vingt-dix, cent quatre-vingts ou deux cent soixante-dix degrés l'une de l'autre et en utilisant ces 2^{r}/4 points et leurs rotations à quatre-vingt-dix, cent quatre-vingts et deux cent soixante-dix degrés comme premier groupe, puis en choisissant parmi les points restants un ensemble suivant de 2^{r}/4 points d'énergie la plus faible qui ne sont pas des rotations à quatre-vingt-dix, cent quatre-vingts et deux cent soixante-dix degrés l'une de l'autre et en utilisant ces 2^{r}/4 points et leurs rotations à quatre-vingt-dix, cent quatre-vingts et deux cent soixante-dix degrés comme groupe suivant, et en répétant l'étape du choix parmi les points restants jusqu'à ce que tous les n groupes soient choisis.

4. Procédé de topographie selon la revendication 1 ou 2, dans lequel lesdits n groupes d'énergie sensiblement différente sont choisis pour chaque constellation en 2D en divisant chaque constellation en 2D de façon géométrique de manière à placer chaque groupe de points dans n secteurs se rapprochant de n cercles concentriques autour d'une origine.

5. Procédé de topographie selon l'une quelconque des revendications 1 à 4, dans lequel z=29, y=2, n=5 et r=5.

6. Procédé de topographie selon l'une quelconque des revendications 1 à 4, dans lequel z=29, y=2, n=6 et r=5.

7. Appareil destiné à transmettre un flux de s bits d'information en envoyant des signaux correspondants sur un canal (40) dans 4+2y intervalles de temps de signalisation, où y est un entier non négatif et s est un entier positif au moins égal à treize, ledit appareil comprenant des moyens d'encodage (16, 18) pour encoder au moins certains des s bits d'information qui apparaissent pendant un bloc desdits 4+2y intervalles de temps de signalisation en ajoutant au moins un bit redondant, pour former un ensemble de z bits de sélection de point de signal pour ledit bloc, où z est un entier supérieur à s, des moyens de sélection (30) pour sélectionner, pour ledit ensemble de z bits de sélection de point de signal, un point de signal en 4+2y dimensions extrait d'une constellation en 4+2y dimensions pour ledit bloc, ledit point de signal en 4+2y dimensions sélectionné pour un bloc particulier étant dépendant du point de signal en 4+2y dimensions sélectionné pour au moins un autre bloc, lesdits moyens de sélection (30) étant connectés pour réagir auxdits moyens d'encodage (16, 18) et comprenant des moyens de topographie pour établir une correspondance entre chaque combinaison possible desdits z bits de sélection de point de signal et les coordonnées des points de signal en 4+2y dimensions dans ladite constellation en 4+2y dimensions, et des moyens de modulation (36, 38) pour moduler au moins une porteuse pour la transmission sur ledit canal (40) d'après les coordonnées représentées par chaque point de signal en 4+2y dimensions sélectionné, lesdits moyens de modulation (36, 38) étant connectés pour réagir auxdits moyens d'encodage (16, 18),
caractérisé en ce que
lesdits moyens d'encodage (16, 18) et lesdits moyens de sélection (30) définissent une division de ladite constellation en 4+2y dimensions en 2^{z-2r-ry} groupements en 4+2y dimensions parmi n^{2+y} groupements possibles en 4+2y dimensions, n étant un entier supérieur à deux et r étant un entier supérieur à deux, chaque groupement en 4+2y dimensions étant une concaténation de 2+y groupes en 2D, chacun provenant de chacune des 2+y constellations en 2D, de telle manière que ladite constellation en 4+2y dimensions soit un sous-ensemble d'une concaténation desdites 2+y constellations en 2D,
dans lequel chaque groupe en 2D comprend 2^{r} points en 2D de sa constellation en 2D respective et chaque constellation en 2D est divisée en n groupes en 2D, chaque groupe en 2D ayant une énergie moyenne sensiblement différente par rapport aux autres, et
dans lequel lesdits moyens d'encodage (16, 18) et lesdits moyens de sélection (30) définissent en outre une division de chacun desdits 2^{z-2r-ry} groupements en 4+2y dimensions en quatre sous-groupes, trois des sous-groupes représentant des rotations à quatre-vingt-dix, cent quatre-vingts et deux cent soixante-dix degrés du premier sous-groupe.

8. Appareil selon la revendication 7, dans lequel lesdits 2^{z-2r-ry} groupements en 4+2y dimensions sont les 2^{z-2r-ry} groupements en 4+2y dimensions d'énergie sensiblement la plus faible qui soient disponibles.

9. Appareil selon la revendication 7 ou 8, dans lequel S=28 et z=29.

10. Appareil selon les revendications 7, 8 ou 9, dans lequel y=2, r=5 et n=5.

11. Appareil selon la revendication 9, dans lequel y=0.

12. Procédé de topographie utilisant 29(x) bits, x étant un entier supérieur à un, pour définir tous les points d'une constellation en 8(x) dimensions, la constellation en 8(x) dimensions comprenant un sous-ensemble désiré de la concaténation de 4(x) constellations en deux dimensions, chaque constellation en deux dimensions comprenant 32(y) points, où y est un entier supérieur à cinq, le procédé de topographie étant caractérisé par les étapes de :
a) division de chaque constellation en deux dimensions en y groupes de trente-deux points chacun, les y groupes étant choisis de telle façon que chacun soit d'énergie moyenne sensiblement différente par rapport aux autres, la concaténation de l'un des y groupes issus de chaque constellation en deux dimensions comprenant un groupement en 8(x) dimensions ;
b) choix parmi les Y^{4(x)} groupements en 8(x) dimensions possibles de 512^{(x)} groupements en 8(x) dimensions, lesdits Y^{4(x)} groupements en 8(x) dimensions constituant ladite constellation en 8(x) dimensions ;
c) pour chaque constellation en deux dimensions, partitionnement de chaque groupe de trente-deux points en quatre sous-groupes de huit points, trois des sous-groupes représentant des rotations à quatre-vingt-dix, cent quatre-vingts et deux cent soixante-dix degrés du premier sous-groupe ; et
d) choix d'un point en 8(x) dimensions dans ladite constellation en 8(x) dimensions :
1) en utilisant 9(x) bits desdits 29(x) bits pour identifier dans lequel desdits 512^{(x)} groupements en 8(x) dimensions se situe ledit point en 8(x) dimensions ;
2) en utilisant 8(x) bits supplémentaires desdits 29(x) bits, deux pour chaque constellation en deux dimensions, pour identifier dans quels sous-groupes du groupement en 8(x) dimensions identifié se trouve ledit point en 8(x) dimensions ; et
3) en utilisant les 12(x) bits restants desdits 29(x) bits, trois pour chaque constellation en deux dimensions, pour identifier parmi les points desdits sous-groupes identifiés ledit point en 8(x) dimensions.

13. Procédé de topographie selon la revendication 12, dans lequel x=2.

14. Procédé de topographie selon la revendication 12, dans lequel y=5 ou 6.
